(19) Europäisches Patentamt / European Patent Office / Office européen des brevets

(11) **EP 3 425 851 B1**

(12) **EUROPÄISCHE PATENTSCHRIFT**

(45) Veröffentlichungstag und Bekanntmachung des Hinweises auf die Patenterteilung:
**07.04.2021 Patentblatt 2021/14**

(51) Int Cl.:
**H04L 12/24** *(2006.01)*     **H04L 12/28** *(2006.01)*
**G05B 15/02** *(2006.01)*

(21) Anmeldenummer: **18181582.0**

(22) Anmeldetag: **04.07.2018**

(54) **AUTOMATISCHE AUSWAHL VON GERÄTEN FÜR GEBÄUDE, ENTSPRECHEND GEBÄUDE-SPEZIFIKATION UND VERWENDERSPEZIFISCHEN OPTIMIERUNGS-KRITERIEN**

AUTOMATIC SELECTION OF DEVICES FOR BUILDINGS, CORRESPONDING BUILDING SPECIFICATION AND USER-SPECIFIC OPTIMISATION CRITERIA

SÉLECTION AUTOMATIQUE DES APPAREILS POUR BÂTIMENT SELON LA SPÉCIFICATION DE BÂTIMENT ET LES CRITÈRES D'OPTIMISATION SPÉCIFIQUES À L'UTILISATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.07.2017 DE 102017114818**

(43) Veröffentlichungstag der Anmeldung:
**09.01.2019 Patentblatt 2019/02**

(73) Patentinhaber: **ABB Schweiz AG**
**5400 Baden (CH)**

(72) Erfinder:
• **Gamer, Thomas**
  **68782 Brühl (DE)**
• **Schramm, Alexander**
  **68165 Mannheim (DE)**
• **Burger, Andreas**
  **76356 Weingarten (DE)**
• **Gruener, Sten**
  **68549 Ilvesheim (DE)**

(74) Vertreter: **Marks, Frank**
  **ABB AG**
  **GF-IP**
  **Wallstadter Strasse 59**
  **68526 Ladenburg (DE)**

(56) Entgegenhaltungen:
**EP-A1- 3 156 856**

• **HENRIK DIBOWSKI ET AL: "Automated Design of Building Automation Systems", IEEE TRANSACTIONS ON INDUSTRIAL ELECTRONICS, IEEE SERVICE CENTER, PISCATAWAY, NJ, USA, Bd. 57, Nr. 11, 30. November 2010 (2010-11-30), Seiten 3606-3613, XP011295962, ISSN: 0278-0046**
• **MC GIBNEY ALAN ET AL: "A systematic engineering tool chain approach for self-organizing building automation systems", IECON 2013 - 39TH ANNUAL CONFERENCE OF THE IEEE INDUSTRIAL ELECTRONICS SOCIETY, IEEE, 10. November 2013 (2013-11-10), Seiten 7696-7701, XP032539098, ISSN: 1553-572X, DOI: 10.1109/IECON.2013.6700416 [gefunden am 2013-12-30]**
• **LEHMANN MATTHIAS ET AL: "Reducing component selection complexity by component aggregation using design criteria", IECON 2016 - 42ND ANNUAL CONFERENCE OF THE IEEE INDUSTRIAL ELECTRONICS SOCIETY, IEEE, 23. Oktober 2016 (2016-10-23), Seiten 7095-7100, XP033033608, DOI: 10.1109/IECON.2016.7793406 [gefunden am 2016-12-21]**
• **ANSO TEGUI C ET AL: "Building Automated Theorem Provers for Infinitely-Valued Logics with Satisfiability Modulo Theory Solvers", MULTIPLE-VALUED LOGIC (ISMVL), 2012 42ND IEEE INTERNATIONAL SYMPOSIUM ON, IEEE, 14. Mai 2012 (2012-05-14), Seiten 25-30, XP032450278, DOI: 10.1109/ISMVL.2012.63 ISBN: 978-1-4673-0908-0**

**Beschreibung**

**Technisches Gebiet**

Die Erfindung bezieht sich allgemein auf elektronische Datenverarbeitung. Speziell geht es um ein computer-implementiertes Verfahren, ein Computersystem sowie um ein Computer-Programmprodukt zur Verwendung bei der technischen Ausstattung von Gebäuden.

**Hintergrund**

Die Funktionalität von Gebäuden hängt u.a. von der technischen Ausstattung mit Geräten ab. Um eine bestimmte, oft (teilweise) automatisierte Funktionalität des Gebäudes zu gewährleisten, sind viele Geräte datentechnisch miteinander verknüpft. Die einzelnen Geräte implementieren dabei eine oder mehrere Funktionen. Die Funktionen können beispielsweise durch Tätigkeiten (oder Handlungen, Aktionen, Aktivitäten) beschrieben werden. Die Funktionen bzw. Geräte können in Kategorien unterschieden werden. Es gibt Kategorien wie Bedienelemente, Sensoren, Aktoren usw.

Während der Planung des Gebäudes (beispielsweise während der Planung der Gebäudestruktur, und der Planung der Gebäudefunktion), muss u.a. zugeordnet werden,

a) welche Geräte konkret in welche Gebäude-Segmente verbaut werden, bzw.
b) welche Geräte für die jeweiligen Gebäude-Segmente wirken sollen.

Der Begriff "Gebäude-Segment" (oder vereinfacht "Segment") bezeichnet Teile bzw. Einteilungskategorien innerhalb des Gebäudes, wie Räume, Stockwerke, Etagen, Gebäudeteile, Treppenhäuser usw. Zur Vereinfachung der Darstellung kann mit einem "Segment" auch das Gebäude insgesamt gemeint sein. Ein Gebäude mit mehreren Etagen kann beispielsweise segmentiert werden in Etagen-Segmente. Das gleiche Gebäude kann aber auch in anderen Kategorien segmentiert werden, beispielsweise in Raum-Segmente.

In der funktionalen Planung geht es darum, die Wirkung der Geräte im Segment zu spezifizieren. Geräte wirken auf das Segment, beispielsweise indem sie Umgebungseigenschaften (wie Temperatur, Feuchtigkeit, Lichtstärke usw.) messen, Eigenschaften im Segment verändern (die Temperatur oder Feuchtigkeit beeinflussen, Licht oder Schatten bereitstellen, usw.), mit Personen im Raum interagieren (beispielsweise Benutzerschnittstellen sind, die die Personen informieren oder die von den Personen Kommandos entgegennehmen). Die Liste der Wirkungen ist nicht abschließend.

Die Planung, an welchem Ort ein Gerät verbaut wird, kommt später hinzu. Beispielsweise wirkt ein Schalt-Aktor für ein Segment, indem er Licht ein- oder ausschaltet. Der Schalt-Aktor kann aber in einen Schaltschrank in einem Verteilerraum (also in einem anderen Segment) eingebaut werden. In diesem Fall sind Wirkort (hier: Licht in einem Raum-Segment) und Einbauort (hier: Schrank) verschieden. Die Unterscheidung, ob ein Gebäude neu errichtet oder ob ein bestehendes Gebäude renoviert wird, spielt nur eine untergeordnete Rolle.

Technische Randbedingungen und Parameter müssen beachtet werden, wie die Verwendbarkeit von Geräten bei zu erwartenden Umgebungsbedingungen (Bürogeräte in Büros, kältebeständige Geräte in Kühlhäusern), die Standzeit der Geräte bis zu einer Reparatur oder dem Austausch, usw. Randbedingungen und Parameter sind für kommerziell genutzte Gebäude (Industriegebäude, Bürogebäude usw.) von größerer Relevanz als bei Wohngebäuden.

Bei der technischen Ausstattung sind Personen mit verschiedenen Qualifikationen und Rollen aktiv. Dazu gehören Architekten, Gebäudeautomations-Experten, Planer, Gebäude-Ausstatter, Installateure, Integratoren usw. Grob vereinfacht können die beteiligten Personen zwei Rollen haben. Die erste Rolle trifft die Auswahl, welche konkret bestimmbaren Geräte in welchen Räumen des Gebäudes verbaut werden sollen. Dabei beachtet die Rolle, dass die geplanten und spezifizierten Funktionen erfüllt werden, und dass technische Parameter (Geräte-Bedingungen) eingehalten werden. Die Bedingungen sind teils mehrfach verknüpft und miteinander in Beziehung stehend. Im Ergebnis steht eine Zuordnung von Funktionen auf Geräte. Die Zuordnung wird beispielsweise in einer Auswahl-Liste dokumentiert. Die zweite Rolle arbeitet die Auswahl-Liste ab und baut die Geräte in das Gebäude bzw. die Räume ein.

Die Zahl der Funktionen pro Segment, die Komplexität der Parameter, die Multifunktionalität von Geräten und weitere Randbedingungen machen die Auswahl anfällig für Fehler. Möglicherweise führt eine Auswahl-Liste zur Identifikation von Geräten, die nicht mehr verfügbar sind oder die technisch veraltet sind. Das Zuordnen per Computer ergibt Auswahl-Listen in Form von Datensätzen. Aber Computer benötigen Ressourcen wie Prozessor- oder Speicherkapazität, Rechenzeit usw. Computer-Rechenzeiten im Bereich von Stunden sind möglich.

Hinzu kommt, dass besonders in Planungsphasen mit Änderungen zu rechnen ist. Neu-Zuordnungen (d.h. wiederholte Zuordnungen) von allen Geräten für alle Räume oder Neu-Zuordnungen für Geräte in einzelnen Räumen sind dabei zu erwarten.

Es ist notwendig, die Komplexität zu reduzieren sowie die Rechenzeiten der Computer zu verkürzen, so dass damit einhergehend die Wartezeiten für die Benutzer verkürzt werden.

Hendrik Dibowski et al: "Automated Design Of Building Automation Systems" (IEEE Transactions on Industrial Electronics IEEE Service Center Piscataway, NJ, USA Bd.57, Nr.11 (2010-11-30), S.3606-3613, beschreibt einen automatischen Ansatz zum Erstellen von Building-Automation-Systems mit Schwerpunkt auf den Schritten Geräte-Auswahl, Interoperabilitäts-Bewertung sowie Zusammenstellen des Systems. Zur Reduktion der Komplexität beschreibt das Dokument die Verwendung von sog. "evolutional algorithms", in Analogie zur Natur Alan Mc Gibney et al: "A systematic engineering tool chain approach for self-organizing building automation systems",IECON 2013 - 39TH ANNUAL CONFERENCE OF THE IEEE INDUSTRIAL ELECTRONICS SOCIETY, IEEE, 10. November 2013 (2013-11-10), Seiten 7696-770 skizziert einen Ansatz für das systematische Engineering kooperierender, adaptiver Gebäudeautomationssysteme, der darauf abzielt, den Engineering-Ansatz in Form einer integrierten Werkzeugkette zu formalisieren, die dabei unterstützt, eine standortspezifische, robuste und zuverlässige Gebäudeautomation zu produzieren. Matthias Lehmann et al: "Reducing component selection complexity by component aggregation using design criteria", IECON 2016 - 42ND ANNUAL CONFERENCE OF THE IEEE INDUSTRIAL ELECTRONICS SOCIETY, IEEE, 23. Oktober 2016 (2016-10-23), Seiten 7095-7100, beschreibt das Reduzieren der Komplexität bei der Komponentenauswahl durch Komponentenaggregation unter Verwendung von Entwurfskriterien. In diesem Papier wird eine Erweiterung eines mehrstufigen Ansatzes für den Komponentenauswahlprozess beschrieben, der die exponentielle Komplexität des Komponentenauswahlproblems reduziert und den Suchraum auf ein Minimum beschränkt.

## Zusammenfassung

Um die Ausstattung eines Gebäudes mit technischen Geräten vorzubereiten, führt ein Computer ein computer-implementiertes Verfahren aus. Der Computer ordnet Funktionen auf technische Geräte zu, wobei die Geräte diese Funktionen mit Wirkung auf ein Segment des Gebäudes ausführen sollen. Der Computer verwendet computer-implementierte Module für die einzelnen Verfahrensschritte. Der Computer liest zunächst Datenstrukturen ein: zum Ersten eine Funktions-Datenstruktur mit der Angabe von Funktionen, die mit ihren Wirkungen für das Segment (oder einer Anzahl Segmente) spezifiziert sind, und zum Zweiten eine Geräte-Pooi-Datenstruktur, die Geräte-Typen und deren ausführbare Funktionen zur Verwendung im Gebäude repräsentiert.

In einem ersten Verarbeitungs-Schritt ordnet ein erstes Modul - das Funktionen-auf-Typen-Zuordnungs-Modul - die Funktionen aus der Funktions-Datenstruktur solchen Geräte-Typen zu, die diese Funktionen erfüllen können. Das erste Modul schreibt die Zuordnung dabei in eine Typen-Liste.

In einem zweiten Verarbeitungs-Schritt ordnet ein zweites Modul - das Typen-auf-Geräte-Zuordnungs-Modul - die Einträge aus der Typen-Liste auf Geräte zu, nach vorgegebenen Geräte-Bedingungen. Geräte-Bedingungen sind technische Parameter bzw. technische Merkmale, die ein Gerät ausweist. Das zweite Modul schreibt die Zuordnung in eine Geräte-Liste, also eine Liste mit Angabe der Anzahl von Geräten der jeweiligen Typen.

In einem dritten Verarbeitungs-Schritt - der optional erfolgt - verarbeitet ein drittes Modul - das Geräte-Optimierungs-Modul - die Geräte-Liste mit einer Bedingungs-Datenstruktur. Diese Bedingungs-Datenstruktur repräsentiert Bedingungen, die die Geräte aus der Geräte-Liste erfüllen müssen. Durch Ausfiltern und Auswählen erzeugt das dritte Modul dabei die Auswahl-Liste, die die Zuordnung der Geräte zu einem Segment (oder zu mehreren Segmenten) angibt.

Der Computer führt die beiden ersten Verarbeitungs-Schritte teilweise im Parallelbetrieb aus. Sobald das erste Modul einen ersten Teil der Typen-Liste generiert hat, berechnet das zweite Modul daraus einen ersten Teil der Geräte-Liste. Sobald das erste Modul einen zweiten Teil der Typen-Liste generiert hat, berechnet das zweite Modul daraus einen zweiten Teil der Geräte-Liste. Dabei kann das zweite Modul auf verschiedenen Computer-Instanzen parallel betrieben werden. Dadurch kann die Rechenzeit verkürzt werden.

Sobald das erste Modul einen ersten Teil der Typen-Liste generiert hat, kann der erste Teil der Typen-Liste als Negativ-Eingabe im ersten Modul verwendet werden. Als Folge davon werden redundante Berechnungen vermieden.

Die Funktions-Datenstruktur sowie die Geräte-Pool-Datenstruktur können mit Vektoren realisiert werden, in denen Funktionen und Verfügbarkeiten (von Funktionen durch Geräte-Typen) als binäre Zahlenwerte abgelegt sind. Diese Vektoren werden zu einer Matrix verknüpft. Das erste und das zweite Modul kann ausgeführt werden als sog. Solver, bei dem die Datenstrukturen sowie die Typen-Liste mit boolescher Algebra verarbeitet werden. Für den Solver kann ein sog. SMT-Solver verwendet werden.

Die Verarbeitung der Datenstrukturen kann optimiert werden. Zum einen kann eine Vorab-Filterung nach vorgegebenen Start-Bedingungen erfolgen. Dabei verkleinert der Computer mittels eines Filter-Moduls die Anzahl der Daten-Elemente in der Geräte-Pool-Datenstruktur. In der Folge kommen das erste und das zweite Modul schneller zu Ergebnissen. Zum anderen kann eine Optimierungs-Filterung auf die Geräte-Liste erfolgen, bzw. es können Listen ausgewählt oder verworfen werden.

Die Geräte-Liste bzw. die optimierte Geräte-Liste ist die Auswahl-Liste mit einer Identifikation von Geräten, die die spezifizierten Funktionen im Segment ausführen können.

Die Trennung der Zuordnung von Funktion zu Gerät in die beiden Teil-Zuordnungen Funktionen-zu-Typen und Typen-zu-Geräte ermöglicht es, die Zuordnung von Funktionen auf Geräte effizient zu berechnen. Die - optionale - Filterung von Datenstrukturen am Eingang des Computers und am Ausgang des Computers erhöht die Effizienz.

Das computer-implementiertes Verfahren kann implementiert werden in einem Computersystem zur Verwendung bei der technischen Ausstattung von Gebäuden, das Module implementiert, die zum Ausführen der Verfahrensschritte angepasst (d.h. adaptiert) sind.

Eine andere Implementierung betrifft ein Computer-Programm-Produkt mit Anweisungen, die - wenn sie in den Speicher eines Computers geladen sind und von mindestens einem Prozessor des Computers ausgeführt werden - dabei die Schritte des computer-implementierten Verfahrens ausführen.

## Kurzbeschreibungen der Zeichnungen

FIG. 1 zeigt ein Blockdiagramm mit einem Computer, der Daten zum Ausstatten eines Gebäudes bereitstellt;

FIGS. 2A und 2B zeigen Blockdiagramme zum Einführen in die Thematik des Zuordnens von Funktionen zu Geräten;

FIG. 3 zeigt ein Blockdiagramm zum Einführen in die Thematik des Zuordnens von Funktionen zu Geräte-Typen;

FIG. 4 zeigt ein Blockdiagram zum Einführen in die Thematik des Zuordnens von Geräte-Typen zu Geräten;

FIG. 5 zeigt ein Blockdiagramm zum Einführen in die Thematik der Optimierung;

FIG. 6 zeigt ein Blockdiagramm des Computers mit den Modulen unter besonderer Berücksichtigung von Zwischen-Ergebnissen und

Abbruchbedingungen;

FIG. 7 zeigt ein Ablauf-Diagramm eines computer-implementierten Verfahrens;

FIG. 8 zeigt ein Funktionsmodell, das mit der Funktions-Datenstruktur bereitgestellt wird; und

FIG. 9 zeigt die Geräte-Pool-Datenstruktur als Tabelle mit Merkmalen von Geräte-Typen.

## Ausführliche Beschreibung

### Computer, Ausstattung von Gebäuden

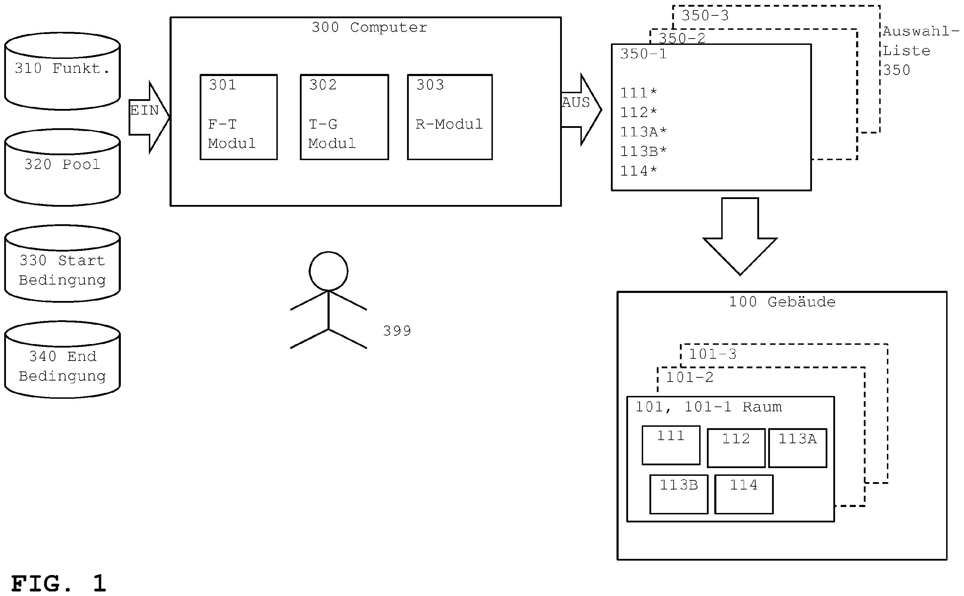

FIG. 1 zeigt ein Blockdiagramm mit einem Computer 300, der Daten zum Ausstatten eines Gebäudes 100 bereitstellt. Das Gebäude 100 ist dargestellt mit mindestens einem Segment 101 (beispielsweise einem Büroraum). Gestrichelte Linien zeigen weitere Segmente. Bei der Unterscheidung von verschiedenen Segmenten gelten die Bezugszeichen 101-2, 101-2 und 101-3. Der Computer 300 empfängt Datenstrukturen 310, 320, 330 und 340 am Eingang des Computers, und liefert die Datenstruktur 350 am Ausgang des Computers. Die Datenstruktur 350 gibt an, mit welchen Automatisierungs-Geräten das Segment 101 (bzw. das Gebäude 100 insgesamt) ausgestattet werden soll, damit die für die Segmente spezifizierten Funktionen ausgeführt werden können. Synonym verwendet die Beschreibung die Bezeichnung "Auswahl-Liste 350".

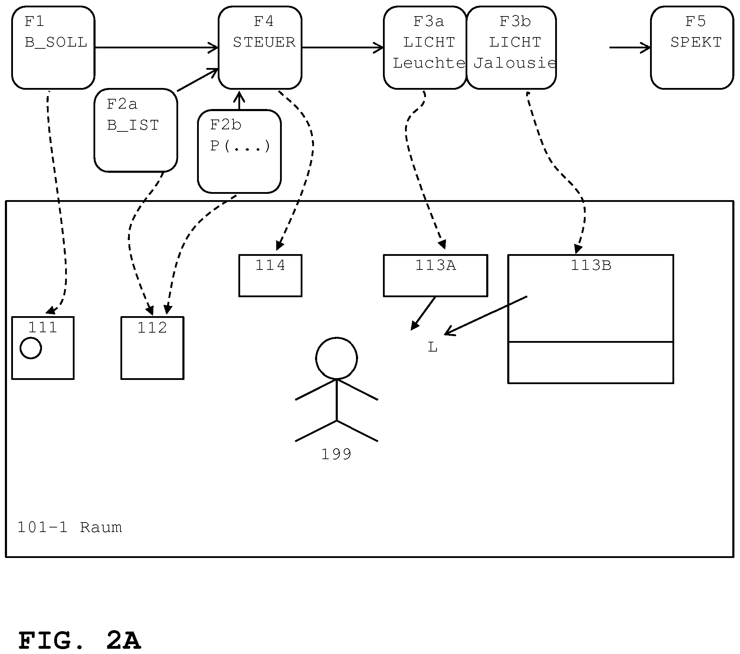

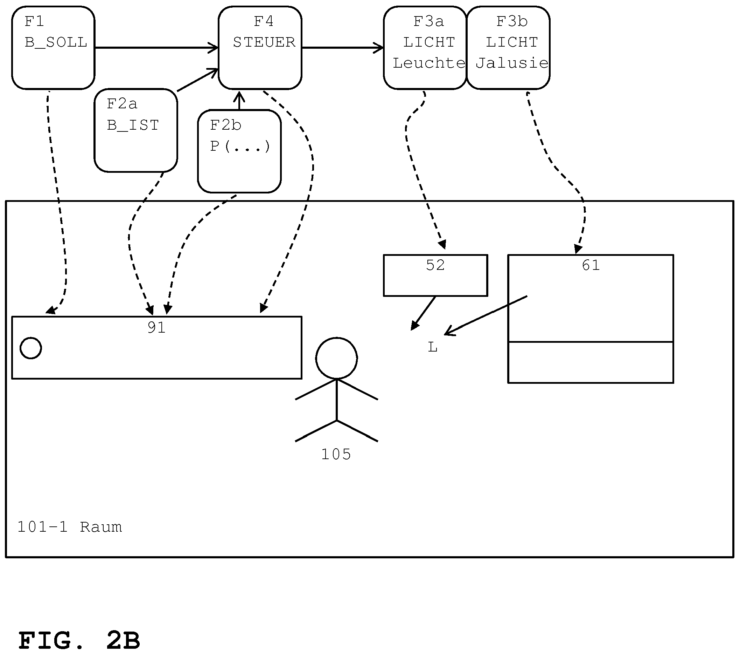

Die Funktions-Datenstruktur 310 gibt an, welche Funktionen im Segment verfügbar sein sollen. Die Funktions-Datenstruktur 310 kann mit Hilfe eines Software-Tools erstellt werden. Solche Tools sind kommerziell verfügbar (z.B. B-CONTROL der TQ-Systems GmbH, in D-82229 Seefeld). Funktions-Datenstrukturen sind üblicherweise standardisiert (vgl. beispielsweise die Richtlinienreihe VDI 3813, des Vereins Deutscher Ingenieure, mit Blättern 1, 2 und 3. in der Ausgabe 2011). Die Funktions-Datenstruktur 310 ist üblicherweise ein Teil der Gebäude-Spezifikation, welche auch weitere Einzelheiten des Gebäudes abbildet (wie die Gebäude-Topologie). Die Beschreibung kann die Funktions-Datenstruktur 310 auch mit Graphen symbolisieren (vgl. FIGS. 2A, 2B): Knoten ("runde" abgerundete Rechtecke) stehen für die Funktionen. Kanten stehen für Daten, die zur Funktionszeit (des Segments) ausgetauscht werden.

Die Geräte-Pool-Datenstruktur 320 enthält Datenstrukturen mit Daten von Automatisierungs-Geräten, die verfügbar sind: Verfügbare Geräte sind Geräte, die zum Zeitpunkt der geplanten Gebäude-Ausstattung (d.h. der Installation) auch physikalisch vorhanden sein können. Das bedeutet nicht, dass die Geräte zum Zeitpunkt der Berechnung (durch den Computer 300) schon gebaut sein müssen.

Die Geräte-Pool-Datenstruktur 320 identifiziert Funktionen, die prinzipiell im Segment implementiert werden können (ob vorgesehen oder nicht), sowie Randbedingungen. Angaben zu Herstellern, Serien-Nummern, Netzwerk-Adressen usw. sind auch möglich. Die Geräte-Pool-Datenstruktur 320 ist beispielsweise mit Vektoren ausgeführt, wobei ein Vektor die Funktionen eines jeweiligen Gerätes identifiziert. Die Geräte-Pool-Datenstruktur 320 kann zusätzliche Angaben enthalten, Funktions- und Geräte-Bedingungen (auch: Compliance-Regeln), die beispielsweise angeben, ob ein Gerät die Funktion als einzige Funktion ausführen kann, ob ein Gerät die Funktion in mehrfach parallel ausführen kann, usw. Die Geräte-Pool-Datenstruktur 320 kann auch als Bibliothek mehrerer Geräte ("library of device packages") verstanden werden.

Die Bedingungs-Datenstrukturen 330/340 enthalten auch Datenstrukturen für Umstände, Randbedingungen und Regeln, die bei der Planung des Gebäudes berücksichtigt werden müssen. Beispielsweise wird man je nach Verwendungszweck des Gebäudes den Schutz der Geräte vor Staub oder Wasser berücksichtigen müssen. Angaben dazu sind international genormt (vgl. "DIN EN 60529 (VDE 0470-1):2014-09 Schutzarten durch Gehäuse (IP-Code)"), die entsprechenden Kurzzeichen der Norm können in die Datenstruktur übernommen werden. Ein weiteres Beispiel sind Energieverbrauchsklassen (Klasse A mit weniger Verbrauch als Klasse B usw.). Energieverbrauchsklassen sind genormt beispielsweise in der DIN EN 15232:2012-09.

Weitere Umstände seien nur in Stichpunkten genannt: der Kontext eines individuellen Bauprojekts, das Land (bzw. des Staatsgebiet) in dem sich das Gebäude befindet, die Art des Gebäudes (wie Industrie, Militär, Wohnung), Präferenzen des Bauherrn oder des Planers, Umgebungsbedingungen (wie Klima) usw.

Die Beschreibung unterscheidet in Datenstrukturen für Start-Bedingungen 330 und End-Bedingungen 340.

Start-Bedingungen 330 werden auf die Geräte-Pool-Datenstruktur 320 angewendet um Geräte zu identifizieren, die zumindest in einem Segment nicht verwendet werden sollen. In Implementierungen ist es möglich, die Start-Bedingungen 330 auf alle Segmente des Gebäudes anzuwenden. Mit andern Worten: die Start-Bedingungen 330 sind Filterkriterien. Als Beispiele dienen Geräte mit einer Nennspannung, die im Gebäude nicht verwendet wird. In Gebäuden, die für europäische Standorte geplant werden, sind Geräte mit einer Nennspannung von 100-120 Volt zu ignorieren also auszufiltern. Nennspannungen von 100-240 Volt sind hingegen verwendbar.

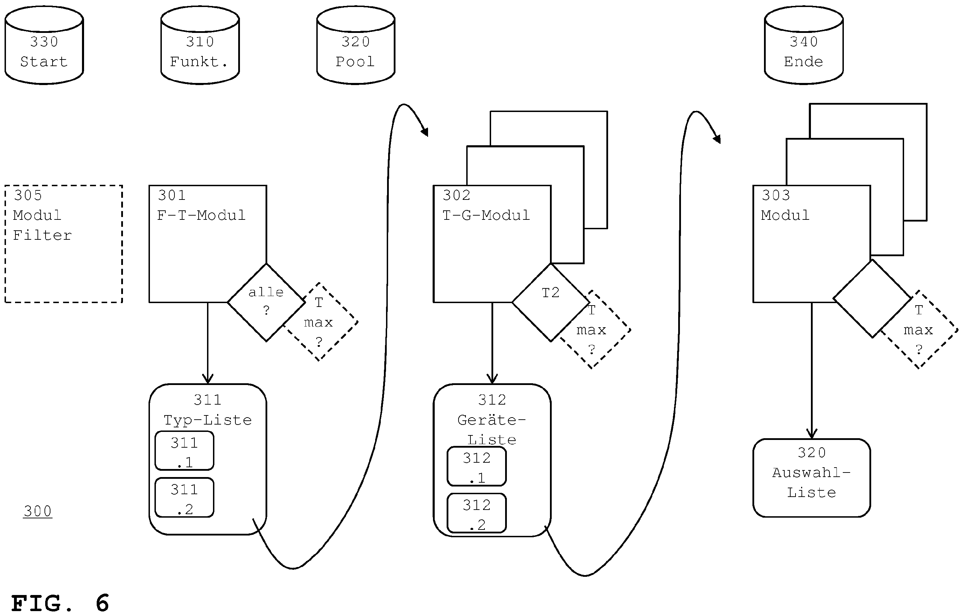

End-Bedingungen 340 werden auf Zwischen-Ergebnisse angewendet, beispielsweise auf eine Geräte-Liste (vgl. 312, in FIG. 6), bei der die Zwischen-Auswahl weiter optimiert werden soll.

Der Computer 300 liefert die Ausgangs-Daten beispielsweise als Auswahl-Liste 350. Die Auswahl-Liste 350 kann unterteilt sein in eine Liste 350-1 für Segment 101-1, Liste 350-2 für Segment 101-2 und Liste 350-3 für Segment 101-3, usw. Die Beschreibung bezieht sich aber auf Auswahl-Liste 350, wobei der Fachmann eine Differenzierung zu bestimmten Segmenten ohne weiteres bewerkstelligen kann.

Das Beispiel der FIG. 1 ist vereinfacht und zeigt die Auswahl-Liste 350 (hier als 350-1) mit den Geräten 111*, 112*, 113A*, 113B*, 114*, die in das Segment 101-1 eingebaut werden sollen. Das Beispiel ist vereinfacht: die Auswahl-Liste 350 kann auch auf Geräte verweisen, die für das Segment wirken sollen, ohne in diesem Segment verbaut zu werden. Die Beschreibung verwendet die Stern-Konvention *, um darauf hinzuweisen, dass es sich bei den Daten in der Liste lediglich um Repräsentanten der jeweiligen Geräte handelt. Die FIG. 1 kann im Zusammenhang mit der FIGS. 2A und 2B betrachtet werden, wobei aus den FIGS. 2A und 2B auch ersichtlich ist, welche Funktionen die jeweiligen Geräte erfüllen. Im Beispiel der FIG. 2B ist die Auswahl-Liste 350 optimiert auf Geräte 52*, 61* und 91*.

Die genannten Datenstrukturen 310, 320, 330, 340 (am Eingang des Computers) können bezogen sein auf jeweilige Segmente, oder auf das Gebäude insgesamt. Die Beschreibung geht davon aus, dass ein Gebäude mit mehreren Segmenten ausgestattet werden soll, wobei die Funktions-Datenstruktur 310 segment-spezifisch ist (damit komplexitätserhöhend), aber die Geräte-Pool-Datenstruktur 320 und die Bedingungs-Definition 330/340 segment-übergreifend sind (also anwendbar auf das gesamte Gebäude, also komplexitätsvermeidend).

Die Auswahl-Liste 350 gibt an, welche Geräte einzubauen sind. Optional gibt die Auswahl-Liste 350 auch an, in welcher Anzahl die jeweiligen Geräte einzubauen sind (als Stückliste).

Grob vereinfacht entspricht die Einteilung der FIG. 1 den o.g. Rollen. Der Computer unterstützt Benutzer 399 in der ersten Rolle bei der Auswahl der Geräte, die die spezifizierten Funktionen erfüllen, wenn die Geräte im Segment verbaut sein werden. Im Ergebnis steht in der Auswahl-Liste 350 eine Zuordnung von Geräten zum Gebäude (bzw. einzelne Listen 350-1, -2, -3 usw. zu den Segmenten 101-1, -2, -3). Die zweite Rolle arbeitet die Auswahl-Liste 350 ab und baut (oder installiert) die Geräte in das Segment ein.

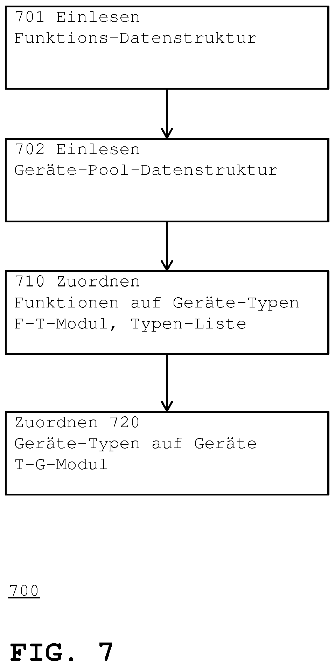

Es ist anzumerken, dass der Benutzer 399 (des Computers 300) sich nicht in räumlicher Nähe des Gebäudes aufhalten muss. Benutzer 399 und Gebäude 100 können sich sogar in verschiedenen Ländern oder Kontinenten befinden. Zum Zeitpunkt der Computer-Aktivitäten (vgl. die Aktivitäten der Module in FIG. 6, das Verfahren nach FIG. 7) muss das Gebäude noch gar nicht errichtet worden sein.

Die Granularität der Auswahl-Liste 350 richtet sich u.a. nach dem Benutzer des Computers, insbesondere nach der (zweiten) Rolle. Das ist hier einleitend an zwei Extrembeispielen erläutert: Eine Auswahl-Liste 350 zur Verwendung bei Ausschreibungen (fachsprachlich auch "Tender") wird beispielsweise auf einer Typen-Ebene bleiben und Angaben zu konkreten Herstellern werden vermieden. Eine Auswahl-Liste zur Verwendung beispielsweise durch Ausstatter oder Installateure wird u.U. einzelne Geräte mit konkreten Serien-Nummern oder Netzwerk-Adressen berücksichtigen. Die Komplexität der Auswahl wird mit der Granularität-Diversität der Auswahl-Liste 350 zusätzlich erhöht.

Zum Ermitteln der Auswahl-Liste 350 verwendet der Computer 300 die Module 301, 302 und 303, die der Computer zu verschiedenen Phasen eines computer-implementierten Verfahrens aktiviert (vgl. FIG. 7). Der Computer kann die Module sequentiell aktivieren (vgl. FIG. 6, Modul 301 zuerst; Modul 302 wenn ein Zwischenergebnis von Modul 301 verfügbar ist; Modul 303 wenn ein Zwischenergebnis von Modul 302 verfügbar ist). Teilweiser Parallelbetrieb ist möglich, beispielsweise für Modul 302. Damit wird die Komplexität der Datenverarbeitung minimiert. Im Ergebnis verkürzt sich die Rechenzeit des Computers 300 insgesamt. Das Gesamt-Problem des Erstellens der Auswahl-Liste 350 auf Grundlage von Datenstrukturen 310, 320, 330, 340 wird aufgeteilt in die folgenden Teil-Probleme / Schritte:

(1) Zuordnen von Funktionen auf Geräte-Typen;
(2) Zuordnen von Geräte-Typen auf Geräte,
wobei die Anzahl der Geräte bestimmt (und optional minimiert) wird; sowie
(3) wahlweise, Priorisieren der Geräte nach Optimierungs-Kriterien.

Mit anderen Worten, der Computer erzeugt eine Funktionen-auf-Geräte-Zuordnung, indem er zunächst Funktionen auf Geräte-Typen zuordnet, und dann Geräte-Typen auf Geräte zuordnet. Diese Trennung der Zuordnungen ermöglicht Parallelbetrieb.

Die Module benötigen Computer-Ressourcen, insbesondere Rechenzeit. Bereits Modul 301 (Schritt (1)) liefert entweder eine Vor-Auswahl von Geräte-Typen oder liefert eine Negativ-Indikation. Die Vor-Auswahl der Geräte-Typen ermöglicht es, das Segment mit Geräten der vor-ausgewählten Typen auszustatten, wenn auch die Ausstattung nicht optimal ist. Die Negativ-Indikation liefert den Hinweis, dass eine Ausstattung (bei Vorgaben zumindest in den Datenstrukturen 310, 320, 330) unmöglich ist. Bei Überschreitung von Zeitvorgaben kann die Daten-Verarbeitung der Module 301, 302, 303 abgebrochen werden. Das Ergebnis bleibt zumindest valide (also in Übereinstimmung mit vorgegebenen Bedingungen), auch wenn es nicht oder nur teilweise optimiert ist. Die Zeitvorgaben können sich auf einzelne Module beziehen (z.B. T2 als Maximalzeit für Modul 302) oder auf Kombinationen von Modulen (z.B. als Maximalzeit für alle Module). Beispielsweise kann die Gesamtrechenzeit festgelegt werden ab dem Start der Berechnungen in Modul 301.

Der Computer 300 arbeitet die Schritte in der Reihenfolge ihrer Wichtigkeit ab: Die technische Funktionalität und damit die Vor-Auswahl der Geräte-Typen hat oberste Priorität (Modul 301). Die Möglichkeit, die Anzahl der Geräte zu minimieren, ist zweitrangig (Modul 302). Die sonstige Optimierung (Modul 303) kommt anschließend. Dem entsprechend sind auch die Abbruch-Kriterien gewählt. Modul 301 liefert nur dann ein (Zwischen-) Ergebnis, wenn die Daten es erlauben. Module 302 und 303 liefern (Zwischen-) Ergebnisse, wobei nach Zeitablauf (z.B. T2 für Modul 302 ab erstmaligem Einlesen der Typen-Liste) die Ausgabe des Zwischen-Ergebnisses erzwungen werden kann. Eine Geräte-Auswahl mit einem Maximum an Optimierung wird dabei ignoriert. Die Gesamtrechenzeit (der Module 301, 302, und 303, vom Einlesen der Daten bis zur Ausgabe der Auswahl-Liste 350) kann durch Parallelbetrieb einzelner Module minimiert werden. In FIG. 6 ist als weiteres Abbruch-Kriterium dargestellt, dass der Computer 300 die Berechnung bei Erreichen von Tmax abbricht (ab Start von Modul 301 gerechnet, mit gestrichelten Rhomben dargestellt). Bei einem Abbruch nach Ablauf von Tmax wird eine vorhandene Geräte-Liste als Auswahl-Liste übernommen, obwohl es noch weitere Geräte-Listen geben könnte die für die Optimierung berücksichtigt werden könnten.

Die folgende Beschreibung führt in die einzelne Module (und Rechenschritte) nacheinander ein. Der mögliche Parallelbetrieb wird am Beispiel des Moduls 302 erläutert.

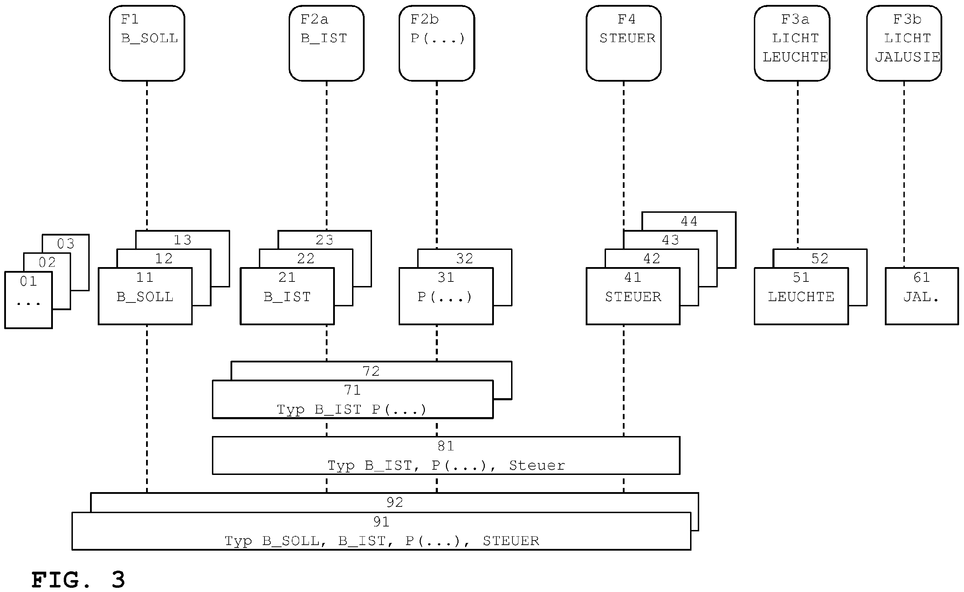

Das Funktionen-auf-Typen-Zuordnungs-Modul 301 (oder abgekürzt: "F-T-Modul") dient zum Zuordnen von Funktionen (aus der Funktions-Datenstruktur 310) zu Geräte-Typen. Eine Einführung in diese Thematik findet sich in Zusammenhang mit FIG. 3. Die Funktionsweise wird weiter vertieft mit Ausführungen zum einem Ausführungsbeispiel mit einem sog. SMT-Solver. Als Zwischen-Ergebnis liefert F-T-Modul 301 eine sog. Typen-Liste (vgl. 311 in FIG. 6).

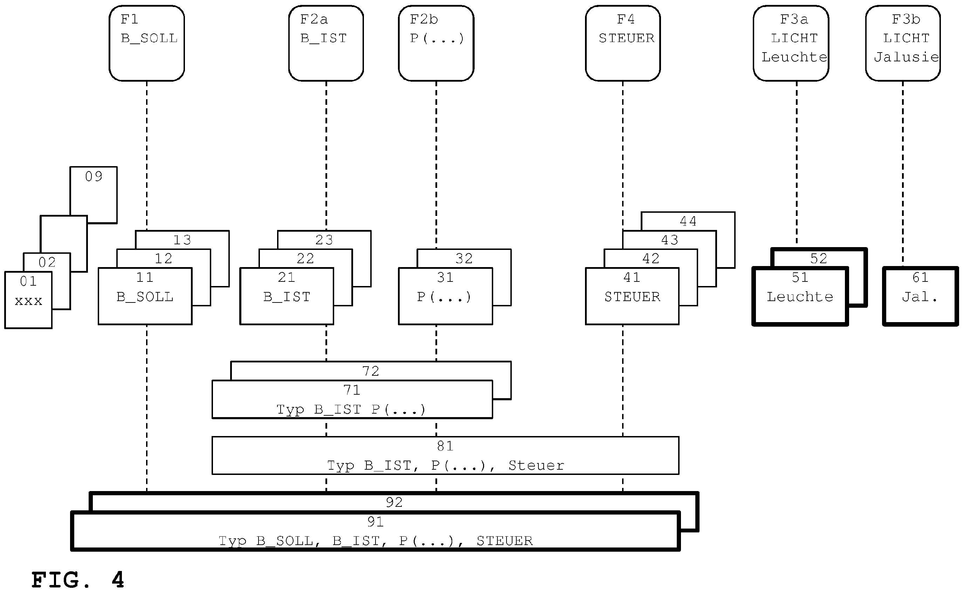

Das Typen-auf-Geräte-Zuordnungs-Modul 302 (oder abgekürzt: T-G-Modul) dient zum Ermitteln von Geräten, die dem Typ entsprechend und deshalb die Funktionen ausführen. Dabei gilt es (als Optimierungs-Kriterium), beispielsweise die Anzahl der Geräte zu minimieren. (Andere Optimierungskriterien sind aber auch anwendbar, wie beispielsweise der Platzbedarf der Geräte im Segment bzw. im Schaltschrank). Das T-G-Modul 302 wird demnach ermitteln, mit welchen (verfügbaren) Geräten (vgl. Geräte-Pool-Datenstruktur 320) eine Kombination von Funktionen in einzelnen Geräten möglich wird. Eine Einführung in die Thematik findet sich im Zusammenhang mit FIG. 4. Als Zwischen-Ergebnis liefert T-G-Modul 302 eine Geräte-Liste (mit Geräten, vgl. 312 in FIG. 6).

Das wahlweise verwendete Geräte-Optimierungs-Modul 303 (oder abgekürzt: Rank-Modul, R-Modul) dient zum Optimieren der Geräte-Liste. Im Ergebnis liefert Modul 303 die Auswahl-Liste 350. Beim Optimieren gibt es zwei Ansätze, die aber zum gleichen Ergebnis führen: (1) Auswählen einer Geräte-Liste (also beispielsweise 312.1 oder 312.2) aus einer Menge von Geräte-Listen, bzw. Modifizieren von Geräte-Listen. Es werden Kriterien angewendet werden, um die Geräte zu identifizieren. Es wird die Geräte-Liste identifiziert, deren Geräte die Kriterien am optimalsten erfüllen. Geräte, die vorgegebene Kriterien (Grenzbedingungen, in Definition 340) nicht erfüllen, werden aus der Geräte-Liste entfernt bzw. ausgefiltert.

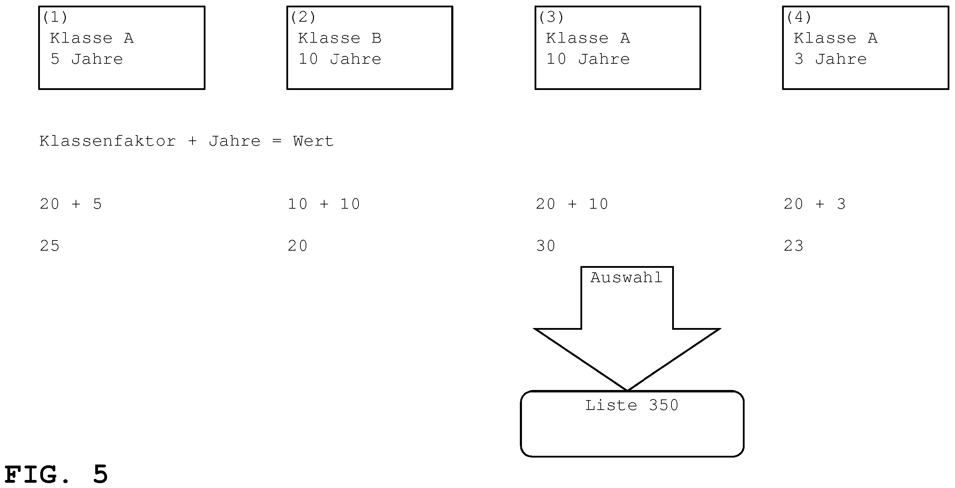

Geräte können beispielsweise optimiert werden nach der physikalischen Größe. Für Geräte, die in Schaltschränke eingebaut werden, gibt die sog Slot-Breite oder Slot-Zahl diese Größe an. Ein Computer-Gerät benötigt beispielsweise 5 bis 7 Slots auf einer Schrank-Schiene. Ein Optimierungsziel kann auch sein, alle Geräte auf beispielsweise einer bestimmten Anzahl Schaltschrank-Schienen anordnen zu können (z.B. genau eine Schiene). Eine ausführliche Einführung in die Thematik findet sich im Zusammenhang mit FIG. 5 mit dem Kriterium der Energieeffizienz.

Die Verwendung des Geräte-Optimierungs-Moduls 303 ist optional, so dass die Auswahl-Liste der Geräte-Liste entsprechen kann (also keine Optimierung stattfindet). Die Geräte-Listen kann man auch als Geräte-Kandidaten-Liste bezeichnen, wobei das Modul 303 die Anzahl der Kandidaten reduziert.

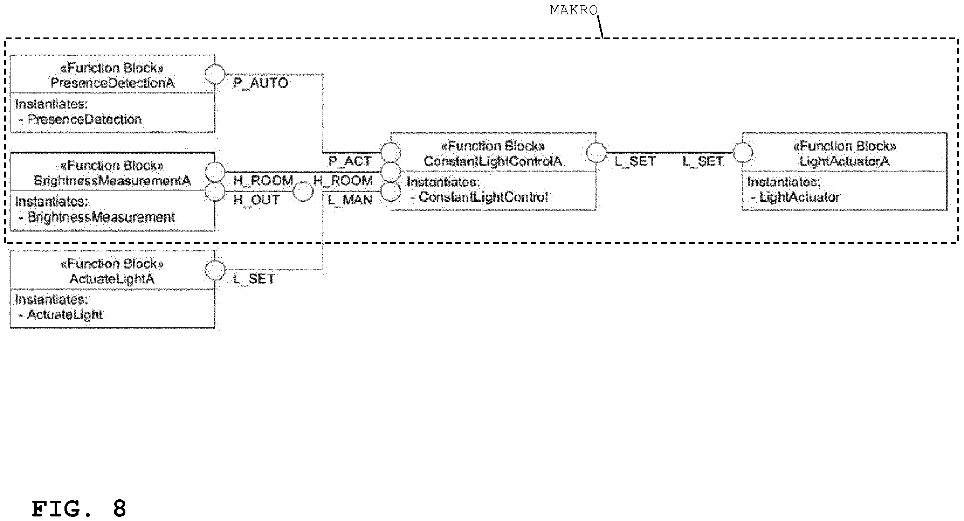

Die Arbeitsweise der Module, die Übergabe der Zwischen-Ergebnisse und Modul-Ausführungs-Abbruch-Bedingungen werden im Zusammenhang mit FIG. 6 und FIG. 7 erläutert. Konkrete Beispiele sind auch in den FIGS. 8-9 gegeben.

Die Module können in Software-Tools wie in die oben genannten Tools integriert werden. Alternativ können die Module auch unabhängig voneinander implementiert werden, beispielsweise in Remote-Server-Computern, die mit dem Software-Tool kommunizieren. Solche Szenarien sind bekannt als "software-as-a-service". Der Fachmann kann Tools und Module miteinander kommunizieren lassen, beispielsweise über sog. Application Program Interfaces (API).

## Zuordnen von Funktionen zu Geräten

FIGS. 2A und 2B zeigen Blockdiagramme zum Einführen in die Thematik des Zuordnens von Funktionen F1, F2a/F2b, F3a/F3b und F4 zu Geräten 111, 112, 113 und 114 (in FIG. 2A) bzw. 92, 52 und 61 (FIG. 2B). Gebäudespezifische Bedingungen werden zunächst nicht betrachtet. Die Zeichnungen sind zweigeteilt mit oben dargestellten Diagrammen für die Funktions-Datenstruktur (310 in FIG. 1), die die Funktionen modelliert (auch "Function Block Model FBM", funktionales Design) und mit unten dargestellten Diagrammen für physikalisch vorhandene Dinge (wie Geräte im Segment), die diese Funktionen implementieren. Beispielhafte Zuordnungen von Funktionen (oben) zu Geräten (unten) sind schematisch durch gestrichelte Pfeile symbolisiert. Solche F-G-Zuordnungen sind als Rechenergebnis der Module 301 und 302 zu betrachten, optional mit Modul 303 optimiert.

Die Beispiele der FIG. 2A und FIG. 2B unterscheiden sich in der Anzahl der Geräte, die die Funktionen ausführen. Die Geräte-Auswahl im Beispiel der FIG. 2B entspricht dem Auswahlverfahren, das in FIGS. 3-7 beschrieben wird.

Um beispielsweise im Segment 101 (z.B. in einem Büro-Raum innerhalb des Gebäudes) einem Benutzer 199 das Licht mit einer bestimmten Helligkeit bei geringem Energieverbrauch bereitzustellen, sind u.a. die Funktionen F1 bis F4 zu implementieren. Die Funktion F5 betrifft einen Sonderfall, der aus didaktischen Gründen hier diskutiert wird.

Die Funktion F1 betrifft das "Ermitteln einer gewünschten Helligkeit". Diese Funktion liefert Daten B_SOLL (B wie "brightness"), die die gewünschte Helligkeit repräsentieren. Die Funktion kann implementiert werden durch Geräte, die Bedienelemente enthalten, beispielsweise mit Drehreglern, durch Benutzer-Schnittstellen von Computern usw. Das Beispiel zeigt Drehregler 111 als Eingabegerät.

Die Funktion F2 hat zwei Unter-Funktionen. Zum einen liefert die Unter-Funktion F2a den Datensatz B_IST, der die Licht-Helligkeit im Segment repräsentiert und zum anderen liefert die Unter-Funktion F2b den Datensatz P(...), der angibt, ob sich eine Person im Raum aufhält P(+) oder nicht P(-). Die Unterfunktionen können implementiert werden mit Helligkeits-Sensoren und mit An- und Abwesenheitssensoren. Das Beispiel der FIG. 2A zeigt einen Kombi-Sensor 112, der beide Unter-Funktionen F2a und F2b erfüllt. Die Datensätze werden können periodisch geliefert werden, innerhalb von Taktzeiten (z.B. jede Sekunde). Es ist auch möglich, dass Datensätze immer dann geliefert werden, wenn vorherbestimmte Ereignisse ("events") eintreten (z.B. F2b beim Erkennen, dass eine Person anwesend geworden ist bzw. abwesend geworden ist).

Die Funktionen F3a (LEUCHTE) und F3b (JALOUSIE) dienen dem Bereitstellen von Licht (mit variabler Helligkeit) und sind - im Beispiel der FIG. 2A - implementiert beispielsweise durch Aktoren für dimmbare Leuchten 113A (für F3a) oder für verschiebbare Fenster-Jalousien 113B (für F3b). Ob die Aktoren in einen Schaltschrank eingebaut werden (z.B. wie ein Schaltrelais für eine Leuchte), oder im Segment verbaut werden (z.B. wie die Leuchte selbst) spielt bei dieser Betrachtung keine Rolle.

Die Funktion F4 dient zum Steuern. Die Funktion kann beschrieben werden als Regelkreis (Helligkeit als Zielgröße, Regelgröße) und kann implementiert werden durch Steuergeräte (oder Steuereinheiten, auch als Controller bezeichnet). Die Funktion benötigt die Daten der Funktionen F1 und F2a/F2b und ermittelt Steuerdaten für F3a/F3b. Im Modell werden die Daten nach vorgegebenen Regeln verarbeitet, beispielsweise wird F4 bei Abwesenheit P(-) die energieverbrauchende Aktoren (Leuchte 113A) ausschalten. Anwesenheit P(+) oder Abwesenheit P(-) haben keinen Einfluss auf die Jalousien 113-B.

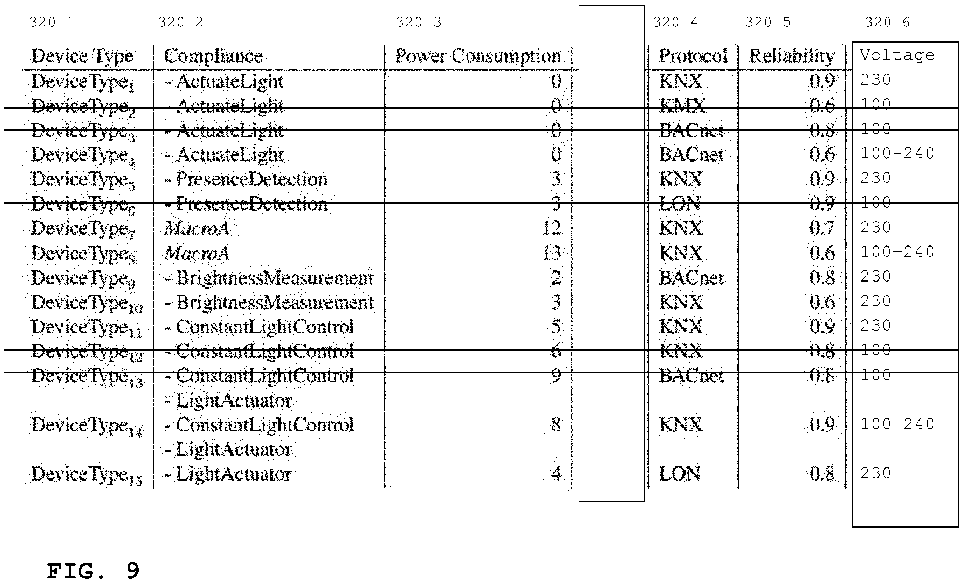

Die einzelnen Geräte 111 bis 114 (bzw. 92, 52 und 61) kommunizieren (senden/empfangen) Daten über übliche Kommunikationssysteme. Diese Systeme können implementiert werden logisch beispielsweise als Netz oder als Daten-Bus, physikalisch mit Kabel (Draht, Glasfaser) oder per Funk. Aus Gründen der Übersichtlichkeit sind die Kommunikationssysteme nicht dargestellt. Der Fachmann kann die entsprechenden Kommunikationsprotokolle (vgl. FIG. 9) auswählen, wobei die Verwendung der Protokolle eine Randbedingung darstellen kann.

Ein einzelnes Gerät kann eine oder mehrere Funktionen ausführen. Im Beispiel der FIG. 2A gibt es die folgenden Funktion-zu-Geräte-Zuordnungen (Pfeile von oben nach unten):

F1 zu Gerät 111 (Drehregler)
F2a und F2b zu Gerät 112 (für beide Unter-Funktionen, zwei Pfeile zum Gerät)
F3a zu Gerät 113A

F3b zu Gerät 113B
F4 zu Gerät 114

Am Beispiel der FIG. 2A ist ersichtlich, dass ein Gerät mehrere Funktionen implementieren kann (z.B. Kombi-Sensor 112), oder mehrere Geräte für einzelne Funktionen vorgesehen sein können (z.B. Leuchte 113A und Jalousie 113B).

Weitere Kombinationen von Funktionen und Geräten sind denkbar. Es gibt beispielsweise Geräte, die mehr als zwei Funktionen in sich vereinen. Am Beispiel der FIGS. 2B, 3 und 4 ist ersichtlich, dass die Funktionen auf noch weniger Geräten ausgeführt werden können. Die Beschreibung geht weiter unten auch darauf ein, dass die Anzahl der Funktionen je Gerät auch gewissen Grenzen unterliegen kann, was vom Computer 300 auch berücksichtigt wird.

FIG. 2 zeigt auch eine Zusatzfunktion F5, die beispielsweise vorsieht, das Licht immer auf konstanter Lichtfarbe (Spektralfarbe) zu halten. Für diese Funktion ist allerdings kein Gerät verfügbar. In der Geräte-Pool-Datenstruktur 320 fehlt ein Eintrag für ein Gerät (bzw. für einen Geräte-Typ), das diese Funktion F5 ausführen kann. Eine Zuordnung (d.h. dieser Funktion auf ein Gerät) kann nicht erfolgen.

Die Darstellung der FIGS. 2A und 2B ist sehr vereinfacht. Funktions-Datenstrukturen gibt es für (fast) alle Segmente im Gebäude, oder auch für Kombination von Segmenten. Einige Funktionen können mehrmals vorkommen (z.B. F4 STEUER in (fast) allen Segmenten, allerdings mit verschiedenen Eingabe- und Ausgabedaten). Die Funktions-Datenstruktur 310 kann demnach auch mehrere Gebäude (bzw. Räume) betreffen, wobei die Funktionen hierarchisch aufgebaut sein können. Für mehrere Räume können die gleichen Funktionen festgelegt werden.

**Zuordnen zu Typen**

FIG. 3 zeigt ein Blockdiagramm zum Einführen in die Thematik des Zuordnens von Funktionen zu Geräte-Typen.

Die Beschreibung verwendet den Begriff "Gerät" für eine konkrete Vorrichtung, die eine oder mehrere Funktion ausführt. Die Beschreibung verwendet den Begriff "Geräte-Typ" (oder vereinfacht: Typ) für die Kombination von einer oder mehreren Funktionen, die ein Gerät ausführen kann. Damit hat jedes Gerät genau einen Typ (1-zu-1 Zuordnung). Im Beispiel der FIG. 1 steht der Drehregler 111 für das Gerät mit der Funktion, B_SOLL - Daten zu liefern. Umgekehrt gilt das aber nicht. Im Bespiel der FIG. 3 gibt es Geräte der Typen 11, 12 und 13, die diese Funktion ausführen. Die Geräte können sich aber unterscheiden, und zwar in den Funktionen und in weiteren Merkmalen, die in der Geräte-Pool-Datenstruktur 320 hinterlegt sind. Solche Merkmale sind beispielsweise die Benutzerschnittstelle (Drehknopf, Stufenschalter, Touchscreen, usw.), die Größe (Normgröße nach einer DIN-Norm, oder abweichend), die Gehäuse-Farbe (weiß, schwarz) und anderen Merkmale (vgl. FIG. 9 für weitere Merkmale). Geräte, deren Funktionen und Merkmale übereinstimmen, sind Geräte vom gleichen Typ. Geräte vom gleichen Typ können sich in Merkmalen unterscheiden, die nicht in der Geräte-Pool-Datenstruktur 320 erfasst werden. Ein solches Merkmal kann beispielweise die Seriennummer sein.

Die Funktionen (des Modells 350) sind symbolisiert wie in FIGS. 2A und 2B. Zur Vereinfachung der Darstellung sind die (Daten-) Beziehungen zwischen den Geräten mit den jeweiligen Funktionen ausgeblendet.

Für jede Funktion kann ein Geräte-Typ (oder mehrere Geräte-Typen) zugeordnet werden. Die Zuordnung ist - ähnlich wie in FIGS. 2A und 2B - mit gestrichelten Linien (vertikal) symbolisiert. Geräte-Typen sind angegeben mit Rechtecken unter Angabe der Funktion (die ein Gerät ausführen kann) und einer ID-Nummer. Diese Daten kommen aus der Geräte-Pool-Datenstruktur 320 (vgl. FIG. 1). Die ID-Nummer ist hier zweistellig angegeben (und entspricht der Referenznummer auf der Zeichnung), der Fachmann kann das Prinzip auf praktische Ausführungen mit höherstelligen IDs anwenden. Zur Vereinfachung der Darstellung wird angenommen, dass die ID-Nummer einen Geräte-Typ identifiziert, wobei Geräte dieses Typs in das Segment eingebaut werden können. Es ist allerdings auch möglich, dass ID-Nummern weitere Unterteilungen ermöglichen (z.B. Geräte mit gleicher Funktion, aber von unterschiedlichem Typ; oder auch über das Merkmal "Hersteller" in der Geräte-Pool-Datenstruktur 320).

Die Geräte-Pool-Datenstruktur 320 enthält Daten, die folgendes repräsentieren:

Geräte der Geräte-Typen 01 bis 09 erfüllen die Funktion "xxx".
Geräte vom Typ 11 erfüllen die Funktion B_SOLL.
Geräte vom Typ 12 erfüllen die Funktion B_SOLL.
Geräte vom Typ 13 erfüllen die Funktion B_SOLL.
Geräte vom Typ 21 erfüllen die Funktion B_IST.
Geräte vom Typ 22 erfüllen die Funktion B_IST.
Geräte vom Typ 23 erfüllen die Funktion B_IST.
Geräte vom Typ 31 erfüllten die Funktion P(...).
Geräte vom Typ 32 erfüllen die Funktion P(...).
Geräte vom Typ 41 erfüllen die Funktion STEUER.

Geräte vom Typ 42 erfüllen die Funktion STEUER.
Geräte vom Typ 43 erfüllen die Funktion STEUER.
Geräte vom Typ 44 erfüllen die Funktion STEUER.
Geräte vom Typ 51 erfüllen die Funktion LEUCHTE.
Geräte vom Typ 52 erfüllen die Funktion LEUCHTE.
Geräte vom Typ 61 erfüllen die Funktion JALOUSIE.
Geräte vom Typ 71 erfüllen die Funktionen B_IST, P(...).
Geräte vom Typ 72 erfüllen die Funktionen B_IST, P(...).
Geräte vom Typ 81 erfüllen die Funktionen B_IST, P(...), STEUER.
Geräte vom Typ 91 erfüllen die Funktionen B_SOLL, B_IST, P(...), STEUER.
Geräte vom Typ 92 erfüllen die Funktionen B_SOLL, B_IST, P(...), STEUER.

Die hier verwendete Notation "erfüllen die Funktion" ist datentechnisch beispielsweise mit Vektoren beschrieben und implementiert. Es gibt in der Datenstruktur 220 aber keine Aussage, ob die Funktionen auch im Gebäude verwendet werden sollen.

Die Geräte-Pool-Datenstruktur 320 kann neben den Funktions-Typen noch weitere Angaben enthalten, zu den genannten Merkmalen, die hier aber noch nicht relevant sind. Solche Angaben betreffen beispielsweise Funktions- und Geräte-Bedingungen. Noch-nicht-Relevanz bedeutet hier eine Nichtberücksichtigung von Merkmalen (vgl. Benutzerschnittstelle, Größe usw.) bei der Datenverarbeitung im F-T-Modul 301, wobei Rechenzeit gespart werden kann.

Die Funktionen sind der Funktions-Datenstruktur 310 entnommen. Die Funktion "xxx" steht hier als Platzhalter für weitere Funktionen aus der Funktions-Datenstruktur, die in dieser Beschreibung aber nicht weiter diskutiert werden. Die Bezeichner F1 bis F5 sind hier weggelassen.

In einer anderen Notation gibt es für jeden Geräte-Typ (im Pool) einen Vektor, der für jede Funktion (im Modell) einen binären Eintrag hat (z.B. "0" oder "1"; FALSCH oder WAHR; funktionserfüllend oder nicht). Beispielsweise hat der Vektor Einträge für B_SOLL, B_IST, P(...), STEUER, LEUCHTE, JALOUSIE. Bei Geräte-Typ 81 lautet der Vektor dementsprechend [0, 1, 1, 1, 0, 0]. Die Einträge müssen nicht binär sein, sondern können Bedingungen enthalten (vgl. Funktions-Bedingungen).

Zur Vereinfachung der Darstellung können die Typen bezeichnet mit den Bezeichnern für die Funktionen in Verbindung mit den Referenznummern auf der Zeichnung:

Geräte-Typen B_SOLL_11, B_SOLL_12, B_SOLL_13
Geräte-Typen B_IST_21, B_IST_22, B_IST_23
Geräte-Typen P(...)_31 und P(...)_32
Geräte-Typen STEUER_41, STEUER_42, STEUER_43 und STEUER_44
Geräte-Typen LEUCHTE_51 und LEUCHTE_52,
Geräte-Typ JALOUSIE_61,
Geräte-Typen B_IST_P(...)_71 und B_IST_P(...)_72,
Geräte-Typ B_IST_P(...)_STEUER_81, und
Geräte-Typen B_SOLL_B_IST_P(...)_STEUER_91, B_SOLL_B_IST_P(...)_STEUER_92.

Datentechnisch kann der Computer aber andere Bezeichner verwenden, beispielsweise auch Bezeichner aus Katalogen der Geräte-Hersteller.

Es ist auch möglich, dass weitere Funktionen erfüllbar sind. Möglich sind beispielsweise Geräte von Typ B_SOLL_11, die neben B_SOLL-Daten auch Daten zu einer gewünschten Lufttemperatur liefern (weitere Funktion). Geräte vom B_SOLL_12 können auch Daten zum automatischen Ausschalten des Lichts ab einer bestimmten Uhrzeit usw. liefern. Bedingungen (die weiter unten diskutiert werden) können dazu führen, dass Geräte von bestimmten Typen nicht im Segment verbaut werden. Für die weitere Betrachtung wird aber angenommen, dass FIG. 3 nur solche Funktionen darstellt, die mit Geräten auch implementiert werden sollen.

Das F-T-Modul 301 ermittelt Zuordnungen von Funktionen auf Typen. Die Zuordnung erfolgt nach festgelegten Regeln, beispielsweise auf Grundlage von Boolescher Algebra.

Eine solche Regel ist beispielsweise das Zuordnen von Funktionen auf Geräte-Typen, wenn die Funktion (in der Funktions-Datenstruktur 310) eine Entsprechung in der Geräte-Pool-Datenstruktur 320 hat (einfache IF-THEN-Beziehung). Hier im Beispiel in der Typen-Liste 311:

B_SOLL zugeordnet auf Geräte-Typen 11, 12, 13, 91, 92
B_IST zugeordnet auf Geräte-Typen 21, 22, 23, 71, 72, 81, 91, 92
P(....) zugeordnet auf Geräte-Typen 31, 32, 71, 72, 81, 91, 92
STEUER zugeordnet auf Geräte-Typen 41, 42, 43, 44, 81, 91, 92

LEUCHTE zugeordnet auf Geräte-Typen 51, 52
JALOUSIE zugeordnet auf Geräte-Typen 61

Die Zuordnung ist hier in der Richtung von Funktion auf Geräte-Typ verwendet, der Fachmann kann auch eine Zuordnung in anderer Richtung verwenden.

Die Zuordnung kann mittels Matrizen-Operationen erfolgen (siehe unten). Keine Zuordnung erfolgt beispielsweise auf Geräte-Typen 01 bis 09. Damit ist die Menge der in das Segment zu installierenden Geräte nach Geräte-Typen bereits eingeschränkt. Der Ausstatter oder Installateur könnte die Funktion gemäß Datenstruktur realisieren, indem er beispielsweise Einzel-Funktions-Geräte der Typen 11, 12, 13, 21, 22, 23, 31, 32, 41, 42, 43, 44, 51, 52, 61 verwendet. Bei den Geräten-Typen für STEUER ist die Auswahl am größten, bei JALOUSIE steht nur Geräte-Typ 61 zur Auswahl.

Die in der FIG. 3 dargestellte Zuordnung ist vereinfacht dargestellt. Die Komplexität ist aber durchaus höher, kann aber über weitere Regeln ("Compliance", Funktions- oder Geräte-Bedingungen usw.) berücksichtigt werden und in die Matrizen-Berechnung eingehen. In der Geräte-Pool-Datenstruktur 320 kann beispielsweise eine weitere Eigenschaft des Geräte-Typs 72 eingetragen sein, wie die XOR-Verknüpfung von Funktionen. Das bedeutet beispielsweise, dass ein Gerät vom Typ 72 entweder die Funktion B_IST oder die Funktion P(...) ausführt (aber nicht beide Funktionen zur gleichen Zeit). Die Zuordnung berücksichtigt diesen Sachverhalt, indem es zwei Zuordnungen gibt: eine erste Zuordnung B_IST auf Geräte-Typ 72 (in B_IST Konfiguration) und eine zweite Zuordnung P(...) auf ein weiteren Geräte-Typen (auch mit ID 72, aber in P(...) Konfiguration). Die Geräte werden üblicherweise per Software konfiguriert, indem die Speicher-Modulen der Geräte entsprechend programmiert werden. Manuelle Konfigurationen sind aber auch möglich. (Die zu verwendende Konfiguration steht letztendlich in der Auswahl-Liste 350).

Die Zuordnung mit Matrizen-Operationen kann in Iterationen bzw. mehreren Stufen ablaufen. In einer ersten Lösungs-Stufe ermittelt der Computer beispielsweise, dass die Funktionen mit den Geräten-Typen 11, 21, 31, 41, 51 und 61 erfüllbar (d.h. implementierbar) sind. In einer zweiten Lösungs-Stufe ermittelt der Computer beispielsweise, dass der Geräte-Typ 71 einige der Funktionen auch erfüllt und in einer solchen Lösung die Geräte-Typen 21 und 31 nicht benötigt werden. Die Lösungs-Stufen können miteinander verknüpft werden, beispielsweise indem der Computer die Geräte aus der ersten Stufe als "negativ" markiert. Damit ist es möglich, für die zweite Stufe neue, bisher noch nicht identifizierte Lösungen zu finden. Die Lösungs-Stufen können aber auch mit anderer Granularität verwendet werden (z.B. erste Stufe 11, 21, 31, 41, 51, 61; zweite Stufe 12, 21, 31, 41, 51, 61, dritte Stufe 13, 21, 31, 41, 51, 61, usw. mit weiteren Stufen in Variationen).

Der Computer (d.h. hier F-T-Modul 301) wird die Zuordnung abbrechen, wenn keine weiteren Geräte-Typen (als Lösungen zu den Matrizen) gefunden werden, die die Funktionen erfüllen. Der Computer wird die Zuordnung auch abbrechen, wenn zumindest eine Funktion keine Entsprechung im der Geräte-Pool-Datenstruktur 320 findet. Ein "Abbruch" bedeutet hier, dass keine Lösung vorhanden ist. Sollte wie - im Beispiel der FIG. 2 angedeutet - eine Funktions-Modell einschließlich F5 vorhanden sein, dann kann das Gebäude nicht ausgerüstet werden. Der Computer gäbe dem Benutzer 399 aber umgehend eine Rückmeldung. Weitere Berechnungen (in den anderen Modulen wie 302 und 303) wären in einem solchen Fall nicht mehr notwendig.

### Zuordnen zu Geräten

FIG. 4 zeigt ein Blockdiagram zum Einführen in die Thematik des Zuordnens von Geräte-Typen zu Geräten.

Die Ausführung der Funktion im Segment (nach Funktionsmodell) kann so erfolgen, dass jeweils ein Gerät eines jeden Geräte-Typs (vgl. FIG. 3, Einzel-Funktions-Geräte) für jede Funktion verwendet wird. Im Beispiel wären das verschiedene sechs Geräte für sechs Funktionen. Die Anzahl der verschiedenen Geräte lässt sich aber minimieren, indem Kombigeräte verwendet werden. Geräte-Typen für die Minimal-Konfiguration (minimale Anzahl an Geräten) sind mit dicken Linien dargestellt: Geräte-Typen 91 oder 92, Geräte-Typen 51 oder 52 sowie Geräte-Type 61 (3 verschiedene Geräte). (Lösungsstufen, je nach Granularität auch 91/51/61, 92/51/61, 91/52/61 sowie 92/52/61.)

### Optimierung

FIG. 5 zeigt ein Blockdiagramm zum Einführen in die Thematik der Optimierung. Hier sei angenommen, dass in einem Zwischenergebnis vier Geräte-Typen (bzw. konkrete Geräte) ermittelt werden, welchen bestimmte Kriterien erfüllen. Geräte der 4 Typen haben technische Eigenschaften wie Energieklassen (A oder B) oder Zuverlässigkeit (hier als Standzeit bis Ausfall in Jahren angegeben):

Geräte vom Typ (1) mit Eigenschaften Klasse A / 5 Jahre
Geräte vom Typ (2) mit Eigenschaften Klasse B / 10 Jahre
Geräte vom Typ (3) mit Eigenschaften Klasse A / 10 Jahre

Geräte vom Typ (4) mit Eigenschaften Klasse A / 3 Jahre

In einem ersten Szenario, kann eine solche Liste beispielsweise von T-G-Modul 302 bereitgestellt werden. Zur Übernahme in die Auswahl-Liste 350 soll allerdings nur ein Geräte-Typ zugelassen werden. Nach einer vorgegebenen Regel gibt es Klassenfaktoren ("10" für Klasse A, "20" für Klasse B) und die Addition der Klassenfaktoren und der Jahre zu Zahlenwerten. Die Regel berücksichtigt, dass hohe Klassen (wenig Verbrauch) und lange Standzeiten bevorzugt sind. Die Zahlenwerte sind 25 für (1), 20 für (2), 30 für (3) sowie 23 für (4). Geräte-Typ (3) wird aufgrund des höchsten Zahlenwertes übernommen.

In einem zweiten Szenario erfolgt bereits eine Vorab-Filterung (vgl. Filter-Modul 305) nach einer Grenzbedingung. Beispielsweise kann eine Grenzregel festlegen, dass Geräte-Typen mit einer Standzeit unter 4 Jahren nicht in Betracht kommen. In einem solchen Fall würde (4) schon gar nicht in der Datenstruktur erscheinen, die von den Modulen verarbeitet wird. Im Zwischenergebnis stehen dann die Geräte-Typen (1), (2) und (3), aus der nach der genannten Klassenfaktoren/Standzeit-Regel der Geräte-Typ (3) übernommen wird.

Die Optimierung kann auch angewendet werden, indem die Kriterien auf mehrere Geräte-Listen angewendet werden. In einem ersten Szenario, können solche Listen beispielsweise von T-G-Modul 302 bereitgestellt werden (vgl. 312.1 und 312.2 in FIG. 6). Die Kriterien (wie Energieklassen und Standzeiten) werden für jede Liste berechnet, wobei die Liste mit den günstigsten Werten in die Auswahl-Liste 350 übernommen wird.

**Computer**

FIG. 6 zeigt ein Blockdiagramm des Computers 300 mit den Modulen 301, 302 und 303 unter besonderer Berücksichtigung von Zwischen-Ergebnissen ("runde" Rechtecke) und Abbruchbedingungen (Rhomben).

Die Module 302 und 303 sind mit aufeinander-gelegten Rechtecken dargestellt. Diese Notation zeigt an, dass es Ausführungsformen mit Modul-Instanzen geben kann, wobei die Instanzen parallel betrieben werden können. (Der Begriff "Instanz" betrifft die Verwendung von Datenstrukturen, Computer-Befehlen usw. im Computer.) Die Zahl der Modul-Instanzen (im Beispiel je drei Instanzen für Module 302 und 303, eine Instanz für Modul 301) richtet sich nach dem Prozessor- und Speicherkapazität, für die der Computer 300 ausgelegt ist. Der Fachmann ist in der Lage, einen Parallelbetrieb von Modulinstanzen einzurichten, beispielsweise durch die Verwendung von Multi-Core-Prozessoren (Prozessoren mit mehreren Kernen), durch Techniken wie Pipelining (auch pipe and filter pattern) u.a.

Das Filter-Modul 305 (links dargestellt) ist optional vorgesehen. Es verwendet die Start-Bedingungen 340 und filtert die Geräte-Pool-Datenstruktur 320 (vgl. das o.g. Beispiel mit der Nennspannung). Die Anzahl der Elemente in Geräte-Pool-Datenstruktur 320 kann damit von vornherein beschränkt werden, was die Effizienz der Module 301, 302 und 303 weiter erhöht.

Das Funktionen-auf-Typen-Zuordnungs-Modul 301 empfängt die Funktions-Datenstruktur 310, verwendet die Geräte-Pool-Datenstruktur 320 (vgl. auch FIG. 1 und FIGS. 2A, 2B) und erzeugt die Typen-Liste 311 (vgl. FIG. 3 symbolisiert die Zuordnung durch Rechtecke an den gestrichelten Zuordnungslinien).

Wie oben bereits angedeutet, gibt es Abbruchbedingungen bzw. Ergebnisübergabe-Bedingungen (Rhombus-Symbol). F-T-Modul 301 beendet seine Aktionen (per Abbruch), wenn keine weiteren Typen der Typen-Liste hinzugefügt werden (z.B. je nach Granularität die "letzte" Lösung 92/52/61 wenn die anderen Variationen bereits berechnet worden sind). Modul 301 bricht seine Aktionen aber auch ab, wenn es zu mindestens einer Funktion (im Modell) keine Typen aus dem Pool zuordnen kann (vgl. das Beispiel mit F5 in FIG. 2). Modul 301 übergibt Zwischenergebnisse an Modul 302 (per Typen-Liste 311 bzw. in Teilen der Typen-Liste) sobald Zwischen-Ergebnisse vorhanden sind (z.B. 11/21/31/41/51/61 als erste Variation und als erstes Zwischen-Ergebnis) und beendet die Berechnung, wenn keine weiteren Zwischen-Ergebnisse mehr berechnet werden können.

In Ausführungsbeispielen ist Modul 301 mit einem sog. Solver ausgeführt. Ein Solver ist ein Computerprogramm, das mathematische Aufgaben numerisch löst. Solver sind dem Fachmann geläufig und kommerziell verfügbar. Im Ausführungsbeispiel wird ein Solver verwendet, der auf logische Operationen spezialisiert ist, beispielsweise ein SMT-Solver (satisfiability modulo theories SMT). Ein solcher Solver ist unter der Bezeichnung "Z3" verfügbar von der Microsoft Corporation, Redmond, WA, USA.

Das Typen-auf-Geräte-Zuordnungs-Modul 302 empfängt die Typen-Liste 311 (von Modul 301) und erzeugt die Geräte-Liste 312. T-G-Modul 302 kann ebenfalls mit einem Solver ausgeführt werden. T-G-Modul 302 verwendet Bedingungen, die beispielsweise in der Geräte-Pool-Datenstruktur 320 abgelegt sind.

Wie bereits erwähnt, ist Parallelverarbeitung möglich. Für die in FIG. 3 genannten Lösungs-Stufen können Module 301 und 302 gleichzeitig arbeiten. F-T-Modul 301 bestimmt die erste Lösungsstufe und gibt diese als Typen-Liste 311.1 an T-G-Modul 302 weiter. Während F-T-Modul 301 an der zweiten Lösungsstufe (Typen-Liste 311.2) rechnet, bestimmt T-G-Modul 302 die Geräte-Liste (zumindest für die erste Lösungsstufe, als Geräte-Liste 312.1). Wenn das F-T-Modul 301 die zweite Lösungsstufe als Typen-Liste 311.2 an T-G-Modul 302 geliefert hat, wird T-G-Modul 302 die Geräte-Liste 312.2 erzeugen. Mit anderen Worten, die Modularität der Verarbeitungsschritte (des computer-implementierten Verfahrens) erlaubt Parallelbetrieb, so dass die eingangs genannte Rechenzeit minimiert werden kann.

Der Fachmann kann die Abbruchbedingungen bzw. die Aktivitäten der Module ausbalancieren, so dass Stillstandzeiten einzelner Module minimiert werden.

Bezugnehmend auf das Beispiel der FIGS. 2B, 3 und 4, steht im Zwischen-Ergebnis von Modul 301 die Typen-Liste 311.1 mit Geräte-Typen 51 (LEUCHTE), 61 (JALOUSIE) und 91 (B_SOLL/B_IST/P(...)/STEUER). Die Typen-Liste 311.1 ist die erste Lösung des Solvers. Im Zwischen-Ergebnis von Modul 301 steht auch die Typen-Liste 311.2 mit Geräte-Typen 52, 61, 91 (als zweite Lösung des Solvers). Weitere Kombinationen sind auch möglich, in weiteren Typen-Listen, wie beispielsweise in einer (bereits genannten) Typen-Liste mit den Typen 11, 21, 31, 41, 51, 61, in einer Typen-Liste mit den Typen 12, 22, 32, 42, 52, 61, in einer Typen-Liste mit den Typen 11, 22, 31, 42, 51, 61 usw. Zur Vereinfachung der Darstellung konzentriert sich die Beschreibung auf die Typen-Listen 311.1 und 311.2.

T-G-Modul 302 wird diese Typen-Listen 311.1 und 311.2 weiter bearbeiten und bestimmen, wieviel Geräte verwendet werden müssen (d.h. die Anzahl der Geräte je Funktion). Im Zwischen-Ergebnis stehen die beiden Geräte-Listen 312.1 und 312.2. Die hier beispielhaft verwendete Konvention "1x" zeigt an, dass im Beispiel genau ein Gerät eines betreffenden Geräte-Typs verwendet wird.

Geräte-Liste 312.1 mit 1x 51, 1x 61, 1x 91
Geräte-Liste 312.2 mit 1x 52, 1x 61, 1x 91

Für andere Funktionen, Segmente usw. kann die Anzahl der Geräte anders sein.

Das Geräte-Optimierungs-Modul 303 kann diese Geräte-Listen 312.1 und 312.2 weiter optimieren, hier durch Auswahl einer Geräte-Liste. Im Beispiel unterscheiden sich die beiden Listen nur in einem Geräte-Typ. Es gibt die beiden Geräte-Typen 51 und 52 mit der Funktion LEUCHTE. Zur Auswahl der Geräte-Liste als Auswahl-Liste 350 (d.h. dem Ergebnis) kommen weitere Daten aus dem Geräte-Pool 350 zur Verarbeitung. Es gibt beispielsweise Merkmale wie Energieklassen (z.B. Klasse A sparsamer als Klasse B, Energieeffizienz), anhand derer Geräte mit technisch niedrigerem Energieverbrauch bevorzugt werden. Die Funktion kann mit Geräten aus beiden Listen erfüllt werden, je nach Kriterien werden Geräte einer Liste bevorzugt. Weitere Merkmale sind in Zusammenhang mit FIG. 9 beispielhaft erläutert.

Falls weitere Daten zur Verfügung stehen (zu Merkmalen wir Energieklassen, Hersteller, Standzeit, usw., vgl. auch FIG. 5) können diese weiteren Daten gewichtet werden und in einer sog. "fitness function" bearbeitet werden. In einer Fitness-Funktion kann für jeden Geräte-Typ eine gewichtete Zahl verarbeitet werden. Diese Zahlen können für jede Geräte-Liste aufsummiert werden. Im Beispiel haben die Geräte der Typen 51 und 52 verschiedene Zahlenwerte, die Geräte-Typen in verschiedenen EnergieKlassen eingeordnet sind. Die Summe der Zahlenwerte ergibt die Bevorzugung der Geräte-Liste, auf der Geräte der Energie-Klasse A stehen, das ist beispielsweise die Liste 312.2. Diese Liste 312.2 wird in die Auswahl-Liste 350 übernommen.

Im Ergebnis steht die Auswahl-Liste 350, die Geräte identifiziert, wie sie beispielsweise in das Segment bei FIG. 2B eingebaut werden: Geräte der Typen 92, 52 und 61.

## Ablaufdiagramm

FIG. 7 zeigt ein Ablauf-Diagramm eines computer-implementierten Verfahrens 700 zum Zuordnen von Automatisierungs-Geräten (vgl. die Geräte 111, 112, 114, 113A, 113B in FIG. 1) auf ein Segment (z.B. Raum 101) in einem Gebäude 100. Das Verfahren wird ausgeführt von einem Computer, beispielsweise dem Computer 300 (FIG. 1).

Im Schritt Einlesen 701, liest der Computer eine Funktions-Datenstruktur 310 für das Segment 101 ein. Die Funktions-Datenstruktur 310 enthält die Angabe von Funktionen (z.B. F1, F2, F3, F4), die mit ihren jeweiligen Wirkungen für das Segment im Gebäude spezifiziert sind.

Im Schritt Einlesen 702, liest der Computer eine Geräte-Pool-Datenstruktur 320 für das Gebäude ein. Die Geräte-Pool-Datenstruktur repräsentiert Geräte-Typen (01, 02, 03, ... 92) und deren ausführbare Funktionen (B_SOLL, B_IST, P(...), STEUER, LEUCHTE, JALOUSIE usw.) zur Verwendung in Gebäuden im allgemeinen.

Ein Funktionen-auf-Typen-Zuordnungs-Modul 301 führt den Schritt Zuordnen 710 der Funktionen (F1, F2, F3, F4) aus der Funktions-Datenstruktur 310 auf Geräte-Typen aus. Dabei erzeugt das F-T-Module eine Typen-Liste 311.

Ein Typen-auf-Geräte-Zuordnungs-Modul 302 führt den Schritt Zuordnen 720 der Geräte-Typen aus der Typen-Liste 311 auf Geräte nach vorgegebenen Geräte-Bedingungen aus. Das T-G-Modul 302 erzeugt dabei eine Geräte-Liste 312. Diese Liste gibt an, wieviel Geräte eines jeweiligen Geräte-Typs mit Wirkung für das Segment 101 benötigt werden.

FIG. 7 stellt auch ein Computer-Programm bzw. ein Computer-Programm-Produkt dar. Wenn das Programm (bzw. das Produkt) in den Speicher eines Computers geladen ist, dann führt der Prozessor die Schritte des computer-implementierten Verfahrens aus. Die in der FIG. 7 gezeigten Blöcke stellen somit auch die Module des Programms (bzw. des Produkts) dar.

Es folgen weitere Einzelheiten in Ausführungsbeispielen für die einzelnen Module.

**Typen-auf-Geräte-Zuordnungs-Modul und Regeln**

Bezüglich der Zuordnung von Funktionen auf Typen (Modul 301) und von Typen auf Geräte (Modul 302) können weitere Bedingungen verarbeitet werden. Eine Zuordnung erfolgt nur wenn die jeweiligen Bedingungen erfüllt sind. Die Bedingungen können Funktions-Bedingungen und Geräte-Bedingungen sein.

(a) **Einzel-Funktions-Typ:** Ein Geräte-Typ erfüllt nur genau eine Funktion (Beispiel die Geräte 11 bis 61 in FIG. 3)
(b) **Einzel-Funktion-Multi-Implementierung-Typ:** Ein Geräte-Typ erfüllt eine einzige Funktion, kann aber mehrfach implementiert werden in einem einzelnen Gerät. Ein einzelner Steuercomputer (d.h. ein Gerät) mit der Funktion STEUER kann die Licht-Helligkeit in mehreren Räumen steuern. Dabei verarbeitet der Steuercomputer Daten von mehreren Sensoren und steuert mehrere Leuchten an. Die Zahl der Räume entspricht damit der Zahl der Funktions-Instanzen auf dem Gerät. Die Anzahl ist üblicherweise begrenzt und durch die Prozessor- und Speicherkapazität des Gerätes bedingt. Die Maximalzahl ist im Gerätepool hinterlegt.
(c) **Mehrfach-Funktion-Einzelgerät-Typ:** Ein Gerät dieses Geräte-Typs kann verschiedene Funktionen ausführen, kann aber die Funktionen aber nur jeweils einmal (d.h. in einem Gerät) ausführen. Geräte der Typen 71 und 72 (FIG. 3) bestimmen die IST-Helligkeit (B_IST) sowie die Anwesenheit/Abwesenheit von Personen (P(...)) im Segment. Für mehrere Segmente würde man mehrere Geräte des gleichen Typs benötigen. Eine solche Bedingung (Funktions- und Gerätebedingung) kann auch als Makro-Gerät-Bedingung bezeichnet werden (vgl. FIGS. 8 und 9 mit weiteren Beispielen).
(d) **XOR-Funktions-Typ:** Ein Gerät kann per Konfiguration entweder in einer ersten Funktion oder in einer zweiten Funktion verwendet werden, aber nicht gleichzeitig in beiden Funktionen. Denkbar sind beispielsweise Sensoren, die entweder B_IST liefern oder die P(...) liefern. In den Matrizen werden Einträge verwendet (z.B. mit Boolescher Algebra), die im Beispiel erzwingen würden, B_IST und P(...) mit zwei Geräten auszuführen.
(e) **Makro-Funktions-Typ:** Ein Gerät dieses Typs bietet eine Kombination von verschiedenen Funktionen ("Macro"). Eine Bedingung kann beispielsweise wie folgt definiert werden: Wenn ein Gerät des Makro-Funktions-Typs in das Gebäude verbaut wird, dann verwendet das Gerät alle Funktionen. Alle Funktionen des Gerätes müssen demnach aktiviert werden. Ein Aktivieren einzelner Funktionen ist nicht vorgesehen, beispielsweise um Platz im Schaltschrank zu sparen. Andere Bedingungen können allerdings auch verwendet werden. Per Algebra können solche Bedingungen definiert werden.
(f) **Typ mit Maximal-Zahl an Funktionen:** Ein Geräte-Typ kann in der Anzahl der ausführbaren Funktionen begrenzt sein. Beispielsweise kann ein Controller-Gerät (STEUER, wie 41, 42, 43, 44) auf eine Maximalzahl von Segmenten ausgelegt sein, für die es Steuerungsaufgaben im Gebäude übernimmt. Die Begrenzung auf eine festgelegte Zahl dient u.a. der Gewährleistung der Zuverlässigkeit des Segments als technischem System, in dem das Gerät implementiert wird. Die Zahl kann in den Matrizen hinterlegt sein.

**Datenstrukturen, mit Vektoren**

Jedes Gerät in der Geräte-Pool-Datenstruktur 320 kann durch einen Vektor beschrieben werden. Der Vektor hat einen Eintrag für eine Funktion, die in der Funktions-Datenstruktur 310 verwendet wird. Der Eintrag gibt an, ob die Funktion verfügbar ist oder nicht.
Dem entsprechend kann die Funktions-Datenstruktur 310 auch mit Vektoren beschrieben werden. In der Kombination ergibt sich eine Matrix, die sog. Solver-Matrix B, die hier dargestellt ist mit einer Anzahl n Geräte-Typen (Laufindex j) und einer Anzahl m von Funktionen (Laufindex i).

$$B = [\vec{v}_1, \ldots, \vec{v}_n] = \begin{bmatrix} b_{1,1} & \ldots & b_{1,n} \\ \vdots & \ddots & \vdots \\ b_{m,1} & \ldots & b_{m,n} \end{bmatrix} \; where \; \vec{v}_i = \begin{bmatrix} b_{i,1} \\ \vdots \\ b_{i,m} \end{bmatrix}$$

Die Elemente der Matrix können binär sein. Bei Übereinstimmung in den Funktionen von Geräte-Typ und Funktions-Datenstruktur ergeben sich im einfachsten Fall die Elemente mit dem Wert WAHR (oder TRUE, oder 1, usw.).
Die Matrix kann auch Randbedingungen abbilden, wie die genannten Funktions-Bedingungen oder Geräte-Bedingungen, die dem Solver übergeben werden. Es können auch Funktionen hinterlegt sein (die aus der Geräte-Pool-Datenstruktur kommen).
Zusätzliche Bedingungen können der Matrix als dem zu lösenden Problem hinzugefügt werden (bei SMT-Solvern mittels Boolescher Algebra). Beispielsweise kann vorgesehen sein, die Zahl der Funktionen, die von einem Gerät ausgeführt wird, zu begrenzen (vgl. Typ mit Maximal-Zahl an Funktionen). Dazu kann eine Variable und eine Schwellwert-Bedingung (also TRUE/FALSE) definiert werden, die die Zahl der Funktionen pro Geräte abbildet, die für das Gerät zugeordnet sind. Im Beispiel der FIG. 3 hat das Gerät 81 eine Zahl von 3 Funktionen zugeordnet bekommen (in der Typen-Liste 311), die Geräte 91 und 92 haben jeweils 4 Funktionen zugeordnet bekommen.

Es ist möglich, eine Maximal-Zahl festzulegen und die Matrizen daraufhin zu überprüfen. Damit wird die Komplexität von Geräten (im Gebäude, in den Segmenten) eingeschränkt, was u.a. die Wartung der Geräte vereinfachen kann.

Weitere Funktions-Bedingungen und Geräte-Bedingungen lassen sich in ähnlicher Art und Weise mit Hilfe der Matrix verarbeiten.

**Modularität**

Die Modularität (vgl. separate Module, separate Schritte) erlaubt es dem Benutzer 399 (vgl. FIG. 1), auf Änderungen einzugehen. Es ist auch denkbar, dass die Ausstattung für bestehende Gebäude von Zeit zu Zeit angepasst wird bzw. neu optimiert wird.

**Benutzer-Interaktion**

Der eingangs vorgestellte Benutzer 399 ist nicht auf die genannte erste Rolle beschränkt. Je nach Anforderungsprofil können Granularität und Bedingungen geändert werden. Der Integrator-Benutzer sieht mehr Einzelheiten zu den Geräten als beispielsweise der Planer-Benutzer. Der Fachmann ist in der Lage, dem Computer 300 die entsprechenden Schnittstellen zu geben, so dass der Benutzer 399 die Datenstrukturen bequem eingeben (oder modifizieren) kann. Beispiele für Schnittstellen sind sog. Wizards.

**Änderungen bei den Eingangsgrößen**

Die Verwendung von sog. dynamischen SMT-Solvern ist möglich. Die Module 301 und 302 können beispielsweise für modifizierte Funktionen, Geräte-Pools, Bedingungen (aus den Datenstrukturen 310, 320, 330) jeweils verschiedene Zwischen-Ergebnisse (Typen-Liste 311, Geräte-Liste 312) erstellen. Der Computer kann eine optimale Lösung (in der Auswahl-Liste 350) ermitteln, indem er Zwischen-Ergebnisse (wie die Geräte-Listen) verfügbar macht (Modul 302) und diese optimiert (Modul 303). Mit Blick auf den genannten Parallel-Betrieb kann ein solches Vorgehen zeitsparend sein.

**Beispiel**

Die Beschreibung wendet sich einem weiteren Beispiel zu. Die Schritte Zuordnen von Funktionen auf Typen, Zuordnen von Typen auf Geräte sowie Optimieren der Geräte werden mit Blick auf Geräte-Typen, Optimierungskriterien sowie einem Funktionsmodell (vgl. Funktions-Datenstruktur 310) erklärt.

**Funktionsmodell im Beispiel**

FIG. 8 zeigt - graphisch - ein Funktionsmodell, das mit der Funktions-Datenstruktur 310 bereitgestellt ist. Bezeichner in englischer Sprache sind üblich, wobei die Bedeutungen wie folgt sind:

"Function Block" = Funktionsblock
"PresenceDetection" = Anwesenheits/Abwesenheitserkennung (ähnlich P(...))
"BrightnessMeasurement" = Bestimmen der Helligkeit
"ConstantLightControl" = Steuerung eine konstanten Helligkeit
"LightActuator" = Aktuatoren (oder "Aktoren") für Licht
"Instatiates:" = Hinweise auf Geräte

Die Signale sind bezeichnet mit "P_AUTO" ( ), "H_ROOM", "H_OUT", usw. Auf die genauen Bezeichner kommt es aber nicht an. Die gestrichelte Linie fasst einige Funktionsbausteine zu einem sog. "Makro" zusammen. Die Funktion betrifft - wie im Beispiel der FIGS. 2A und 2B auch - die Beleuchtung eines Segments in Abhängigkeit der An/Abwesenheit von Personen. Die Verwendung von Makros ist optional.

**Geräte-Pool-Datenstruktur**

FIG. 9 zeigt die Geräte-Pool-Datenstruktur 320' als Tabelle mit Merkmalen von 15 Geräte-Typen. Die Spaltenüberschriften entsprechen Merkmalen 320-1 bis 320-6, wie

320-1: Identifikation
320-2: ausführbare Funktionen bzw. Funktionsgruppen ("Makro")
320-3: technisches Merkmal des Stromverbrauchs
320-4: technisches Übertragungsprotokoll für Daten
320-5: Kennzahl für die technische Zuverlässigkeit
320-6: Angabe der Nennspannung

In der Zeichnung werden Bezeichner in englischer Sprache verwendet. Auf die genauen Inhalte der Merkmale kommt es allerdings hier nicht an. Die Merkmale in den Spalten 320-2 bis 320-6 sind technische Parameter (also Geräte-Bedingungen, die Geräte vom jeweiligen Typ einhalten).
Beispielhafte Kriterien (vgl. Filter-Modul 305) sind:

(i) Filterkriterien (das Merkmal "voltage"/Nennspannung so zu filtern, das nur Geräte-Typen identifiziert werden, die bei einer im Gebäude verwendeten Nennspannung von 230 Volt funktionieren),
(ii) Grenzkriterien (auch Boundary-Kriterien, wie das Merkmal "power consumption" unter dem Wert 30), sowie
(iii) Optimierungskriterien (beispielsweise das Merkmal "reliability" zu maximieren).

Zunächst werden Filter verwendet (vgl. 305 in FIG. 6), die einige Geräte-Typen aus den Pool (vgl. Datenstruktur 320) entfernen. Ein Ausschluss-Kriterium "Spannung = 230 Volt" wird auf 15 Geräte-Typen (Spalte "device type", DT1 bis DT15) angewendet. In der FIG. 9 sind ausgefilterten Geräte-Typen durchgestrichen. Dabei bleiben die folgenden Geräte-Typen übrig: DT1, DT4, DT5, DT7, DT8, DT9, DT10, DT11, DT14 und DT15 (Anzahl n, Laufindex j). Dieser reduzierte Satz von 10 Geräte-Typen ist der Pool 320 (Eingang zum F-T-Modul 301, hier als Z3-Solver implementiert).
Es ist möglich, an dieser Stelle Randbedingungen ("constraints") zu formulieren, beispielsweise (als XOR-Verknüpfung, z.B. als "DT5 xor DT7 xor DT8" wenn nur exakt ein Gerät "exactly one module" verwendet werden soll. Weitere Beispiele gibt es als sog. MMC-Constraints oder NEI-Constraints.
Ein MMC-Contraint dient im F-T-Modul 301 (in Schritt 710) zum Prüfen, ob ein bestimmtes Makro (beispielsweise ein bekannter Makro-Funktions-Typ, der dem Typen-zu-Geräte-Zuordnungsmodul 302 bekannt ist. Falls ja, wird diese Information dem Solver als Eingabe übergeben und in diesem Schritt auch für die Zuordnung verwendet (zur Abbildung eines Makro-Funktions-Typs auf einen Geräte-Type, dessen Geräte solche Makros umsetzen).
Ein NEI-Constraint stellt sicher, dass eine korrekte Gerätezuweisung erfolgt. Im Schritt Zuordnen 720, darf das T-G-Modul 302 keine Typ-zu-Gerät-Zuordnung ausführen, die nicht erlaubt ist (d.h. den Wert 0 hat). Es ist also nicht möglich, eine Zuordnung auf Geräte zu definieren, die in der Gebäudeautomatisierung nicht verwendet werden (also in der Datenstruktur 320 keine Funktions-Zuordnung haben).

**Zuordnungen**

Das domain-spezifische technische Problem ist damit als ein allgemeines mathematisches Problem für den Solver definiert und dem Solver im F-T-Modul 301 übergeben.
Der Solver erzeugt die Matrix B (siehe oben) die binären Werte TRUE oder FALSE gesetzt werden. Im Beispiel gibt es n = 10 Spalten (Index j, für Geräte-Typen) und m = 5 Zeilen für Funktionen (Index i). Es ergibt sich zunächst die folgende Zuordnung (Funktion auf Typ):

(Funktion i=1) "PresenceDetection" auf DT5 (j=3)
(Funktion i=2) "BrightnessMeasurement" auf DT9 (j=6)
(Funktion i=3) "ActuateLight" auf DT1 (j=1)
(Funktion i=4) "ConstantLightControl" auf DT11 (j=8)
(Funktion i=5) "Light Actuator" auf DT15 (j=10)

Diese Zuordnung entspricht allerdings noch nicht der Typen-Liste 311, da Funktionen auch auf weitere Geräte-Typen zugeordnet werden können. Beispielsweise kann die Funktion i=2 "BrightnessMeasurement" auch auf DT10 zugeordnet werden, die Funktion i=4 "ConstantLightControl" auch auf DT14. Hinzu kommen die Geräte-Typen DT7 und DT8 (j=4, j=5), die mehrere Funktionen ausführen können (vgl. das Makro). Diese Zuordnung entspricht einem ersten Teil 311.1 der Typen-Liste 311, bzw. einer ersten Variante 311.1 der Typen-Liste 311.

Der Solver bestimmt weitere Zuordnungen und speichert sie in einem zweiten Teil der Typen-Liste. (Die Beschreibung verwendet die beiden Teile 311.1 und 311.2, der Fachmann kann den Solver programmieren, die Lösungen in weitere Teile zu speichern und das Lösen fortzusetzen, bis der Solver keine Lösungen mehr findet.).

Optional kann der Solver den ersten Teil dem an das T-G-Modul (302 in FIG. 6) übergeben) und parallel dazu den zweiten Teil berechnen.

Jedes Mal, wenn der Solver eine Lösung findet (d.h. Funktion-auf-Geräte-Zuordnungen) werden diese Zuordnungen-Lösungen als negative Bedingung markiert. Beispielsweise wird die Zuordnung im ersten Teil 311.1 der Typen-Liste 311 als negativ markiert. Diese Maßnahme verhindert, dass der Solver die Lösung noch einmal findet. Dabei werden Ressourcen gespart (Speicher, Rechenzeit usw.). Wenn der Solver den zweiten Teil berechnet hat, nimmt er den ersten und den zweiten Teil als negative Bedingung, usw. Dieses Herangehen dient auch dazu, Rechenzeit zu sparen. Der Solver kann so lange rechnen, bis keine weiteren Zuordnungen (also weitere Teile) ermittelt werden. Der Fachmann kann aber auch eine andere Abbruchbedingung vorsehen, beispielsweise durch eine Maximalzeit (angewendet auf den zweiten Teil und weitere Teile).

Im Beispiel kann der Solver eine Anzahl von 24 verschiedenen Zuordnungen ermitteln und diese in erste, zweite, dritte usw. Teile der Typen-Liste 311 ablegen. Diese zugeordneten Geräte-Typen sind Kandidaten für die Geräte-Liste 312 (vgl. FIG. 6)

Die Beschreibung geht im Folgenden darauf ein, wie das Zuordnen (vgl. Schritt 720) auf Geräte (aus der Typen-Liste 311 nach vorgegebenen Geräte-Bedingungen) erfolgen kann, wobei der Computer die Geräte-Liste 312 erzeugt.

Die Beschreibung konzentriert sich beispielhaft auf den Geräte-Typ DT5. Eine (im Solver hinterlegte) Routine wird für die Funktion i=1 "PresenceDetection" verwendet. Die Routine verwendet einen Skalar, da nur eine Funktion auf Geräte dieses Geräte-Typs zugeordnet wird. Um diese Routine zu verwenden, werden Randbedingungen verwendet: Die erste Randbedingung ist die sog. "NEI-Constraint". Das bedeutet, dass im Gebäude kein Gerät verbaut werden darf, dass keine Funktion ausführt. In der Berechnung wird das Erfüllen der Bedingung erkannt, indem der Skalar geprüft wird: der Skalar muss größer oder gleich 1 sein.

Die zweite Randbedingung ergibt sich (per Deduktion) aus der Funktion, die Geräte des Typs DT5 erfüllen kann: Geräte dieses Typs DT5 können nur genau eine Funktion erfüllen (Single Function Block Compliance), und zwar nur "PresenceDetection". Für diese Randbedingung wird ein sog. FBC-Constraint (Function Block Constraint) verwendet, der das Sortieren von Skalaren der Routine nach den Funktionen verlangt. In diesem Beispiel wird genau eine Gruppe für die Funktion "PresenceDetection" erzeugt, welche eine Variabel enthält, die die Funktion "PresenceDetection" repräsentiert. Die FBC-Bedingung ist demnach definiert als ein Skalar, der kleiner oder gleich 1 sein muss.

Da es nur eine Zuordnung von einem Gerät mit der Funktion "PresenceDetection" auf eine Geräte-Instanz vom Geräte-Typ DT5 geben kann, muss der Skalar kleiner als 1 sein oder genau 1 sein. Für diesen Geräte-Typ sind Bedingungen wie beispielsweise der XOR-Funktions-Typ nicht vorgesehen. Unter Berücksichtigung dieser beiden Bedingungen (NEI, FBC) ergibt sich ein Wert von 1.

Im Ergebnis steht die Geräte-Liste 312, die in diesem Beispiel die Geräte-Typen DT5 ("PresenceDetection"), DT9 ("BrightnessMeasurement"), DT1 ("ActuateLight"), DT11 ("ConstantLightControl") und DT15 ("LightActuator"), in jeweils einem Gerät (d.h. eine "1" Geräte-Instanz).

Optional kann vorgesehen sein, dass das Geräte-Optimierungs-Modul 303 eine Optimierungsregel verwendet. Hier sei beispielhaft angenommen, dass das Merkmal "power consumption" einen Wert von 30 (z.B. in der Maßeinheit "Watt") nicht überschreiten darf, in der Summe über alle Geräte (also bei Berücksichtigung der jeweiligen Anzahlen, hier 1 Gerät pro Funktion).

(DT5) 3 Watt * 1 +
(DT9) 2 Watt * 1 +
(DT1) 0 Watt * 1 +
(DT11) 5 Watt * 1 +
(DT15) 4 Watt * 1 = 14 Watt.

Da der 14-Watt-Wert den Maximal-30-Watt-Wert nicht übersteigt, wird die Geräte-Liste 312 in die Auswahl-Liste 350 übernommen. Optional kann auch eine sog. Fitness-Funktion berechnet werden.

Die Beschreibung wendet sich einem weiteren Beispiel zu. Die Schritte Zuordnen von Funktionen, Zuordnen auf Geräte sowie Optimieren der Geräte werden mit Blick auf Geräte-Typen, Optimierungskriterien sowie einem Funktionsmodell (vgl. Funktions-Datenstruktur 310) erklärt.

Der Solver bestimmt weitere Zuordnungen und speichert sie in einem zweiten Teil der Typen-Liste. (Die Beschreibung verwendet zwei Teile, der Fachmann kann den Solver programmieren, die Lösungen in weitere Teile zu speichern und das Lösen fortzusetzen, bis der Solver keine Lösungen mehr findet.).

Optional kann der Solver den ersten Teil an das Modul (302 in FIG. 6) übergeben) und parallel dazu den zweiten Teil berechner.

**EP 3 425 851 B1**

**Patentansprüche**

1. Computer-implementiertes Verfahren (700) zum Zuordnen von Automatisierungs-Geräten (111, 112, 114, 113A, 113B) zu einem Segment (101) in einem Gebäude (100), das Verfahren (700) mit folgenden Schritten:

    **Einlesen (701)** einer Funktions-Datenstruktur (310) für das Segment (101), die Funktions-Datenstruktur (310) mit der Angabe von Funktionen (F1, F2, F3, F4), die mit ihren jeweiligen Wirkungen für das Segment (101) im Gebäude (100) spezifiziert sind;
    **Einlesen (702)** einer Geräte-Pool-Datenstruktur (320) für das Gebäude (100), wobei die Geräte-Pool-Datenstruktur zumindest Geräte-Typen (01, 02, 03, 11, 12, 13, 21, 22, 23, 31, 32, 41, 42, 43, 44, 51, 52, 61, 71, 72, 81, 91, 92) der Automatisierungs-Geräte und deren ausführbare Funktionen (B_SOLL, B_IST, P(...), STEUER, LEUCHTE, JALOUSIE) zur Verwendung in Gebäuden (100) im allgemeinen repräsentiert, wobei ein Geräte-Typ die Kombination von einer oder mehreren Funktionen beschreibt, die ein Gerät ausführen kann;
    ausgeführt von einem Funktionen-auf-Typen-Zuordnungs-Modul (301), **Zuordnen (710)** der Funktionen (F1, F2, F3, F4) aus der Funktions-Datenstruktur (310) auf Geräte-Typen, dabei Erzeugen einer Typen-Liste (311); und
    ausgeführt von einem Typen-auf-Geräte-Zuordnungs-Modul (302), **Zuordnen (720)** der Geräte-Typen aus der Typen-Liste (311) auf Geräte nach vorgegebenen Geräte-Bedingungen, dabei Erzeugen einer Geräte-Liste (312), die angibt, wieviel Geräte eines jeweiligen Geräte-Typs mit Wirkung für das Segment (101) benötigt werden.

2. Verfahren (700) nach Anspruch 1, mit weiteren Schritten, die von einem Geräte-Optimierungs-Modul (303) ausgeführt werden:
    Einlesen (703) einer Bedingungs-Datenstruktur (330, 340), mit Angabe von Bedingungen, die die Geräte auf der Geräte-Liste (312) erfüllen müssen, sowie Ableiten einer Auswahl-Liste (350) aus der Geräte-Liste (312), durch Filtern der Geräte-Liste (312) gemäß den Bedingungen.

3. Verfahren (700) nach Anspruch 2, wobei das Ableiten einer Auswahl-Liste (350) aus der Geräte-Liste (312), durch Filtern so erfolgt, indem mehrere Geräte-Listen als Zwischenergebnis bereitgestellt werden, aus der eine Geräte Liste ausgewählt wird.

4. Verfahren (700) nach Anspruch 1, wobei in den Schritten Einlesen (701, 702) der Funktions-Datenstruktur (310) und der Geräte-Pool-Datenstruktur (320), der Computer (300) die Datenstrukturen einliest, die Vektoren enthält, in denen Funktionen und Verfügbarkeiten von Funktionen durch Geräte-Typen als binäre Zahlenwerte abgelegt sind und wobei in den beiden Zuordnen-Schritten (710, 720) ein Funktionen-auf-Typen-Zuordnungs-Modul (301) und ein Typen-auf-Geräte-Zuordnungs-Modul (302) verwendet werden, die jeweils einen SMT-Solver implementieren.

5. Verfahren nach einem der vorhergehenden Ansprüche, wobei der Schritt Zuordnen (720) der Geräte-Typen auf Geräte unter Verwendung von Geräte-Bedingungen mit technischen Parametern erfolgt.

6. Verfahren nach einem der vorhergehenden Ansprüche, wobei die Schritte Zuordnen (710) der Funktionen auf Geräte-Typen, sowie Zuordnen (720) der Geräte-Typen auf Geräte parallel ausgeführt werden, sobald der Schritt Zuordnen (710) der Funktionen auf Geräte-Typen zumindest einen ersten Teil (311.1) der Typen-Liste (311) erstellt hat, so dass der Schritt Zuordnen (720) auf Geräte den ersten Teil (311.1) der Typen-Liste (311) verwendet und der Schritt Zuordnen (710) der Funktionen auf Geräte-Typen parallel dazu einen zweiten Teil (311.2) der Typen-Liste (311) erstellt.

7. Verfahren nach einem der Ansprüche 5 oder 6, wobei im Schritt Zuordnen (710) der Funktionen (710) auf Geräte-Typen, die Typen-Zuordnung im ersten Teil der Typen-Liste (311) als negativ markiert wird, so dass bei der Berechnung des zweiten Teils der Typen-Liste (311), die negativ markierten Typen-Zuordnung nicht noch einmal bei der Berechnung verwendet wird.

8. Verfahren (700) nach einem der vorhergehenden Ansprüche, wobei bei der Ausführung des Verfahrens, der Computer (300) die Schritte Einlesen (701) der Funktions-Datenstruktur (310) sowie Einlesen (702) der Geräte-Pool-Datenstruktur (320) ausführt wird mit Datenstrukturen, die auf einem weiteren Computer hinterlegt sind, der zum Computer (300) ein Remote-Computer ist.

9. Verfahren (700) nach Anspruch 2, wobei die Ausführung der Schritte durch das Funktionen-auf-Typen-Zuordnungs-Modul (301), das Typen-auf-Geräte-Zuordnungs-Modul (302) sowie des Geräte-Optimierungs-Moduls (303) zeitlich begrenzt ist, mit einer Maximalzeit, die mit dem Abschluss des Einlesens der Datenstrukturen beginnt, wobei nach Ablauf der Maximalzeit das Ableiten einer Auswahl-Liste (350) aus der Geräte-Liste (312) erfolgt.

10. Ein Computer-Programm-Produkt mit Anweisungen, die - wenn sie in den Speicher eines Computers geladen sind und von mindestens einem Prozessor des Computers ausgeführt werden - dabei die Schritte des computer-implementierten Verfahrens nach einem der Ansprüche 1-9 ausführen.

11. Computersystem (300) zur Verwendung bei der technischen Ausstattung von Gebäuden (100), **gekennzeichnet durch** Module (301, 302, 303), die zum Ausführen der Verfahrensschritte eines computer-implementierten Verfahrens nach einem der Ansprüche 1-9 computerangepasst sind.

**Claims**

1.  Computer-implemented method (700) for assigning automation devices (111, 112, 114, 113A, 113B) to a segment (101) in a building (100), the method (700) having the following steps:

    reading in (701) a function data structure (310) for the segment (101), the function data structure (310) indicating functions (F1, F2, F3, F4) specified with their respective effects for the segment (101) in the building (100);
    reading in (702) a device pool data structure (320) for the building (100), wherein the device pool data structure represents at least device types (01, 02, 03, 11, 12, 13, 21, 22, 23, 31, 32, 41, 42, 43, 44, 51, 52, 61, 71, 72, 81, 91, 92) of the automation devices and the performable functions thereof (B_DESIRED, B_ACTUAL, P(...), CONTROL, LAMP, BLIND) for use in buildings (100) in general, wherein a device type describes the combination of one or more functions that a device can perform;
    performed by a functions-to-types assignment module (301), assigning (710) the functions (F1, F2, F3, F4) from the function data structure (310) to device types, thereby generating a type list (311); and
    performed by a types-to-devices assignment module (302), assigning (720) the device types from the type list (311) to devices according to predefined device conditions, thereby generating a device list (312) that indicates how many devices of a respective device type with an effect for the segment (101) are needed.

2.  Method (700) according to Claim 1, having further steps performed by a device optimization module (303):

    reading in (703) a condition data structure (330, 340) indicating conditions that the devices on the device list (312) need to meet, and
    deriving a selection list (350) from the device list (312), by filtering the device list (312) according to the conditions.

3.  Method (700) according to Claim 2, wherein the deriving of a selection list (350) from the device list (312) by filtering is effected by virtue of multiple device lists being provided as an intermediate result, from among which one device list is selected.

4.  Method (700) according to Claim 1, wherein in the steps of reading in (701, 702) the function data structure (310) and the device pool data structure (320) the computer (300) reads in the data structures, which contain vectors in which functions and availabilities of functions as a result of device types are stored as binary numerical values, and wherein in the two assigning steps (710, 720) a functions-to-types assignment module (301) and a types-to-devices assignment module (302) are used that each implement an SMT solver.

5.  Method according to one of the preceding claims, wherein the step of assigning (720) the device types to devices is effected by using device conditions with technical parameters.

6.  Method according to one of the preceding claims, wherein the steps of assigning (710) the functions to device types and assigning (720) the device types to devices are performed in parallel as soon as the step of assigning (710) the functions to device types has created at least a first part (311.1) of the type list (311), as a result of which the step of assigning (720) to devices uses the first part (311.1) of the type list (311) and the step of assigning (710) the functions to device types creates a second part (311.2) of the type list (311) in parallel therewith.

7.  Method according to either of Claims 5 and 6, wherein in the step of assigning (710) the functions (710) to device types the type assignment is marked as negative in the first part of the type list (311), as a result of which the negatively marked type assignment is not used again for the calculation when the second part of the type list (311) is calculated.

8. Method (700) according to one of the preceding claims, wherein while performing the method, the computer (300) performs the steps of reading in (701) the function data structure (310) and reading in (702) the device pool data structure (320) using data structures that are stored on a further computer, which is a remote computer with respect to the computer (300).

9. Method (700) according to Claim 2, wherein the performance of the steps by the functions-to-types assignment module (301), the types-to-devices assignment module (302) and the device optimization module (303) has a time limit, with a maximum time that begins at the conclusion of the reading in of the data structures, wherein expiry of the maximum time is followed by a selection list (350) being derived from the device list (312).

10. Computer program product containing instructions that - when loaded into the memory of a computer and executed by at least one processor of the computer - perform the steps of the computer-implemented method according to one of Claims 1-9.

11. Computer system (300) for use for the technical equipment of buildings (100), **characterized by** modules (301, 302, 303) that are computer-adapted to perform the method steps of a computer implemented method according to one of Claims 1-9.

## Revendications

1. Procédé informatisé (700) destiné à associer des appareils d'automatisation (111, 112, 114, 113A, 113B) à un segment (101) dans un bâtiment (100), le procédé (700) comportant les étapes suivantes :

   lire (701) une structure de données de fonctions (310) destinée au segment (101), la structure de données de fonction (310) comportant l'option de fonctions (F1, F2, F3, F4) qui sont spécifiées avec leurs effets respectifs pour le segment (101) dans le bâtiment (100) ;
   lire (702) une structure de données de groupes d'appareils (320) destinée au bâtiment (100), la structure de données de groupe d'appareils représentant en général au moins des types d'appareil (01, 02, 03, 11, 12, 13, 21, 22, 23, 31, 32, 41, 42, 43, 44, 51, 52, 61, 71, 72, 81, 91, 92) des appareils d'automatisation et leurs fonctions exécutables (B_CONSIGNE, B_REEL, P (...), COMMANDE, ECLAIRAGE, STORE) destinées à être utilisées dans les bâtiments (100), un type d'appareil décrivant la combinaison d'une ou plusieurs fonctions qu'un appareil peut exécuter ;
   associer (710), à l'aide d'un module d'association fonction-à-type (301), des fonctions (F1, F2, F3, F4) de la structure de données de fonctions (310) à des types d'appareils, ce qui génère une liste de types (311) ; et
   associer (720), à l'aide d'un module d'association type-à-appareil (302), les types d'appareils de la liste de types (311) à des appareils selon des conditions d'appareils spécifiées, ce qui génère une liste d'appareils (312) qui spécifie combien d'appareils d'un type d'appareil respectif ayant un effet pour le segment (101) sont nécessaires.

2. Procédé (700) selon la revendication 1, comprenant des étapes supplémentaires qui sont réalisées par un module d'optimisation d'appareils (303) :

   lire (703) une structure de données de conditions (330, 340), avec spécification de conditions auxquelles les appareil de la liste d'appareils (312) doivent satisfaire, et
   déduire une liste de sélection (350) à partir de la liste d'appareils (312) par filtrage de la liste d'appareils (312) en fonction des conditions.

3. Procédé (700) selon la revendication 2, la déduction d'une liste de sélection (350) à partir de la liste d'appareils (312) par filtrage étant effectuée de manière à produire comme résultat intermédiaire plusieurs listes d'appareils parmi lesquelles une liste d'appareils est sélectionnée.

4. Procédé (700) selon la revendication 1, dans les étapes de lecture (701, 702) de la structure de données de fonctions (310) et de la structure de données de groupes d'appareils (320), l'ordinateur (300) lisant les structures de données qui contiennent des vecteurs dans lesquels des fonctions et des disponibilités de fonctions sont stockés par types d'appareil sous forme de valeurs numériques binaires et un module d'association fonction-à-type (301) et un module d'association type-à-appareil (302) étant utilisés dans les deux étapes d'association (710, 720), chacun des modules implémentant un solveur SMT.

5. Procédé selon l'une des revendications précédentes, l'étape d'association (720) des types d'appareil à des appareils étant réalisée à l'aide de conditions d'appareil présentant des paramètres techniques.

6. Procédé selon l'une des revendications précédentes, les étapes d'association (710) des fonctions à des types d'appareil et d'association (720) des types d'appareil à des appareils étant réalisées en parallèle dès que l'étape d'association (710) des fonctions à des types d'appareil a établi au moins une première partie (311.1) de la liste de types (311) de sorte que l'étape d'association (720) à des appareils utilise la première partie (311.1) de la liste de types (311) et l'étape d'association (710) des fonctions à des types d'appareil établit en parallèle une deuxième partie (311.2) de la liste de types (311).

7. Procédé selon l'une des revendications 5 et 6, à l'étape d'association (710) des fonctions (710) à des types d'appareil, l'association de types dans la première partie de la liste de types (311) étant marquée comme négative de sorte que, lors du calcul de la deuxième partie de la liste de types (311), l'association de types marquée négativement n'est pas réutilisée dans le calcul.

8. Procédé (700) selon l'une des revendications précédentes, lors de la mise en œuvre du procédé, l'ordinateur (300) réalisant les étapes de lecture (701) de la structure de données de fonctions (310) et de lecture (702) de la structure de données de groupes d'appareils (320) avec des structures de données qui sont stockées dans un autre ordinateur qui est un ordinateur distant de l'ordinateur (300).

9. Procédé (700) selon la revendication 2, la réalisation des étapes par le module d'association fonction-à-type (301), le module d'association type-à-appareil (302) et le module d'optimisation d'appareil (303) étant limitée dans le temps, avec un temps maximum qui commence par l'achèvement de la lecture des structures de données, une fois le temps maximum écoulé, la déduction d'une liste de sélection (350) étant effectuée à partir de la liste d'appareils (312).

10. Progiciel comprenant des instructions qui, lorsqu'elles sont chargées dans la mémoire d'un ordinateur et exécutées par au moins un processeur de l'ordinateur, met en œuvre les étapes du procédé informatisé selon l'une des revendications 1 à 9.

11. Système informatique (300) destiné à être utilisé dans l'équipement technique de bâtiments (100), **caractérisé par** des modules (301, 302, 303) qui sont adaptés de manière informatisée pour exécuter les étapes de procédé d'un procédé informatisé selon l'une des revendications 1 à 9.

EP 3 425 851 B1

FIG. 1

| F1<br>B_SOLL | | F4<br>STEUER | | F3a<br>LICHT<br>Leuchte | F3b<br>LICHT<br>Jalousie | | F5<br>SPEKT |
|---|---|---|---|---|---|---|---|

F2a<br>B_IST

F2b<br>P(...)

101-1 Raum

114

113A

113B

111

112

L

199

# FIG. 2A

F1
B_SOLL

F2a
B_IST

F4
STEUER

F2b
P(...)

F3a
LICHT
Leuchte

F3b
LICHT
LICHT Jalusie

61

52

L

91

105

101-1 Raum

FIG. 2B

FIG. 3

EP 3 425 851 B1

F1
B_SOLL

F2a
B_IST

F2b
P(...)

F4
STEUER

F3a
LICHT
Leuchte

F3b
LICHT
Jalusie

09

02

01
xxx

13
12
11
B_SOLL

23
22
21
B_IST

32
31
P(...)

44
43
42
41
STEUER

52
51
Leuchte

61
Jal.

72
71
Typ B_IST P(...)

81
Typ B_IST, P(...), Steuer

92
91
Typ B_SOLL, B_IST, P(...), STEUER

FIG. 4

```
(1)              (2)              (3)              (4)
 Klasse A         Klasse B         Klasse A         Klasse A
 5 Jahre          10 Jahre         10 Jahre         3 Jahre
```

Klassenfaktor + Jahre = Wert

20 + 5          10 + 10          20 + 10          20 + 3

25              20               30               23

Auswahl

Liste 350

FIG. 5

FIG. 6

```
┌─────────────────────────────────────┐
│ 701 Einlesen                         │
│ Funktions-Datenstruktur              │
│                                      │
│                                      │
└─────────────────────────────────────┘
                    │
                    ▼
┌─────────────────────────────────────┐
│ 702 Einlesen                         │
│ Geräte-Pool-Datenstruktur            │
│                                      │
│                                      │
└─────────────────────────────────────┘
                    │
                    ▼
┌─────────────────────────────────────┐
│ 710 Zuordnen                         │
│ Funktionen auf Geräte-Typen          │
│ F-T-Modul, Typen-Liste               │
│                                      │
└─────────────────────────────────────┘
                    │
                    ▼
┌─────────────────────────────────────┐
│ Zuordnen 720                         │
│ Geräte-Typen auf Geräte              │
│ T-G-Modul                            │
│                                      │
└─────────────────────────────────────┘
```

700

# FIG. 7

**FIG. 8**

EP 3 425 851 B1

| 320-1 | 320-2 | 320-3 | | 320-4 | 320-5 | 320-6 |
|---|---|---|---|---|---|---|
| Device Type | Compliance | Power Consumption | | Protocol | Reliability | Voltage |
| $\text{DeviceType}_1$ | - ActuateLight | 0 | | KNX | 0.9 | 230 |
| ~~$\text{DeviceType}_2$~~ | ~~- ActuateLight~~ | ~~0~~ | | ~~KMX~~ | ~~0.6~~ | ~~100~~ |
| ~~$\text{DeviceType}_3$~~ | ~~- ActuateLight~~ | ~~0~~ | | ~~BACnet~~ | ~~0.8~~ | ~~100~~ |
| $\text{DeviceType}_4$ | - ActuateLight | 0 | | BACnet | 0.6 | 100-240 |
| $\text{DeviceType}_5$ | - PresenceDetection | 3 | | KNX | 0.9 | 230 |
| ~~$\text{DeviceType}_6$~~ | ~~- PresenceDetection~~ | ~~3~~ | | ~~LON~~ | ~~0.9~~ | ~~100~~ |
| $\text{DeviceType}_7$ | *MacroA* | 12 | | KNX | 0.7 | 230 |
| $\text{DeviceType}_8$ | *MacroA* | 13 | | KNX | 0.6 | 100-240 |
| $\text{DeviceType}_9$ | - BrightnessMeasurement | 2 | | BACnet | 0.8 | 230 |
| $\text{DeviceType}_{10}$ | - BrightnessMeasurement | 3 | | KNX | 0.6 | 230 |
| $\text{DeviceType}_{11}$ | - ConstantLightControl | 5 | | KNX | 0.9 | 230 |
| ~~$\text{DeviceType}_{12}$~~ | ~~- ConstantLightControl~~ | ~~6~~ | | ~~KNX~~ | ~~0.8~~ | ~~100~~ |
| ~~$\text{DeviceType}_{13}$~~ | ~~- ConstantLightControl~~ <br> - LightActuator | ~~9~~ | | ~~BACnet~~ | ~~0.8~~ | ~~100~~ |
| $\text{DeviceType}_{14}$ | - ConstantLightControl <br> - LightActuator | 8 | | KNX | 0.9 | 100-240 |
| $\text{DeviceType}_{15}$ | - LightActuator | 4 | | LON | 0.8 | 230 |

FIG. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Automated Design Of Building Automation Systems. **HENDRIK DIBOWSKI et al.** IEEE Transactions on Industrial Electronics. IEEE Service Center, 30. November 2010, vol. 57, 3606-3613
- A systematic engineering tool chain approach for self-organizing building automation systems. **ALAN MC GIBNEY et al.** IECON 2013 - 39TH ANNUAL CONFERENCE OF THE IEEE INDUSTRIAL ELECTRONICS SOCIETY. IEEE, 10. November 2013, 7696-770
- Reducing component selection complexity by component aggregation using design criteria. **LEHMANN et al.** IECON 2016 - 42ND ANNUAL CONFERENCE OF THE IEEE INDUSTRIAL ELECTRONICS SOCIETY. IEEE, 23. Oktober 2016, 7095-7100